# EUROPEAN PATENT APPLICATION

(11) **EP 4 818 986 A1**
(43) Date of publication of application: **07.10.2026**
(21) Application number: 26170362.3
(22) Date of filing: 02.04.2026
(51) Int. Cl.: G06N 5/022, G06N 5/025

(54) **KNOWLEDGE GRAPH PATTERN DETECTION AND APPLICATION**

(30) Priority: 04.04.2025 US 202519170418
(71) Applicant: SAP SE, 69190 Walldorf (DE)
(72) Inventor: PORTISCH, Jan, 69190 Walldorf (DE); BRACHOLDT, Sandra, 69190 Walldorf (DE); ZANDKARIMI, Fareed, 69190 Walldorf (DE)
(74) Representative: Müller-Boré & Partner Patentanwälte PartG mbB

(57) **Abstract**

Systems and methods described herein relate to extending knowledge graph data structures. A system accesses a knowledge graph data structure stored in a data store and preprocesses it to generate a modified knowledge graph data structure by replacing instance nodes with class nodes. The system automatically detects a pattern through processing of the modified knowledge graph data structure by initiating a path from a starting class node and recursively extending the path, until a stopping condition is met, with at least one property-class combination from a current class node in the path having an occurrence frequency that exceeds an occurrence threshold. The system then adjusts the knowledge graph data structure based on the detected pattern.

## Description

### TECHNICAL FIELD

The subject matter disclosed herein generally relates to knowledge graph technology. Particularly, but not exclusively, the subject matter relates to methods and systems for detecting patterns in knowledge graphs and for applying detected patterns in knowledge graph data structures.

### BACKGROUND

Knowledge graphs have become increasingly prevalent for organizing and managing information across diverse domains. These graph-based data structures can represent real-world entities and their relationships in a flexible format that supports complex queries and analysis. Semantic technologies such as RDF (Resource Description Framework) enable knowledge graphs to define vocabularies and rules for representing information, while reasoning capabilities help derive additional facts from existing data. However, identifying meaningful information (e.g., patterns and relationships) within knowledge graphs presents significant technical challenges as the volume and complexity of information continues to grow.

### BRIEF DESCRIPTION OF THE DRAWINGS

Some examples are shown for purposes of illustration and not limitation in the figures of the accompanying drawings. In the drawings, which are not necessarily drawn to scale, like numerals may describe similar components in different views or examples. To identify the discussion of any particular element or act more easily, the most significant digit or digits in a reference number refer to the figure number in which that element is first introduced.
FIG. 1 illustrates part of a knowledge graph, according to some examples.
FIG. 2 is a diagrammatic representation of a network environment that includes a knowledge graph system, according to some examples.
FIG. 3 is a block diagram illustrating components of a knowledge graph data structure, according to some examples.
FIG. 4 is a block diagram illustrating components of a knowledge graph system, according to some examples.
FIG. 5 is a diagrammatic representation of a pattern that is present in a knowledge graph, according to some examples.
FIG. 6 is a flowchart illustrating operations of a method for pattern detection and application in a knowledge graph, according to some examples.
FIG. 7 is a diagrammatic representation of a circular pattern, according to some examples.
FIG. 8 is a diagrammatic representation of an inheritance tree, according to some examples.
FIG. 9 is a data visualization for a pattern detection process in a knowledge graph, according to some examples, illustrating a first stage.
FIG. 10 is a further data visualization for the pattern detection process, according to some examples, illustrating a further stage.
FIG. 11 is a further data visualization for the pattern detection process, according to some examples, illustrating a further stage.
FIG. 12 is a further data visualization for the pattern detection process, according to some examples, illustrating a further stage.
FIG. 13 is a further data visualization for the pattern detection process, according to some examples, illustrating a further stage.
FIG. 14 is a further data visualization for the pattern detection process, according to some examples, illustrating a further stage.
FIG. 15 is a further data visualization for the pattern detection process, according to some examples, illustrating a further stage.
FIG. 16 is a further data visualization for the pattern detection process, according to some examples, illustrating a further stage.
FIG. 17 is a further data visualization for the pattern detection process, according to some examples, illustrating a further stage.
FIG. 18 is a further data visualization for the pattern detection process, according to some examples, illustrating a further stage.
FIG. 19 is a further data visualization for the pattern detection process, according to some examples, illustrating a further stage.
FIG. 20 is a further data visualization for the pattern detection process, according to some examples, illustrating a pattern detected based on processing of the knowledge graph of FIG. 9.
FIG. 21 is a user interface diagram illustrating a user interface for configuring pattern detection operations, according to some examples.
FIG. 22 is a user interface diagram illustrating a user interface for displaying and managing detected patterns, according to some examples.
FIG. 23 is a user interface diagram illustrating a user interface for displaying and managing detected patterns, according to some examples.
FIG. 24 is a user interface diagram illustrating a user interface for editing and adding detecting patterns, according to some examples.
FIG. 25 is a block diagram of a computing system, according to some examples, within which instructions may be executed to perform one or more of the methodologies discussed herein.

### DETAILED DESCRIPTION

Knowledge graphs typically focus on a specific domain. While a knowledge graph can continuously be extended, it can still typically be regarded as "always incomplete" since all knowledge regarding the specific domain cannot be covered in a single knowledge graph. The subject matter described herein relates to systems and methods for detecting and applying patterns in knowledge graph data structures.

In some examples, the systems and methods address significant technical challenges in extending the information provided by a knowledge graph while maintaining consistency and completeness at scale by implementing a pattern detection approach that efficiently processes graph structures to identify statistically significant patterns. Geometric analysis of class-level relationships can be performed to enable automatic extension of ontological rules or completion of instance data, thereby improving the efficiency of knowledge graph processing or the quality of information representation.

An example system may access a knowledge graph data structure stored in a data store (e.g., a database). During preprocessing, the system generates a modified knowledge graph data structure by, for example, replacing instance nodes with class nodes. In some examples, the preprocessing may include adding triple data structures to the knowledge graph data structure by materializing implicit statements based on an ontology data structure. The system may also add inverse relationships for properties in the knowledge graph data structure during preprocessing.

The system may automatically detect one or more patterns through recursive processing of the modified knowledge graph data structure. In some examples, this involves initiating a path from a starting class node and recursively extending the path until a stopping condition is met. The path extension occurs when property-class combinations from the current class node have occurrence frequencies exceeding configured thresholds (e.g., a relative occurrence threshold). The stopping condition may include detecting that a path forms a circular pattern, reaching a maximum number of iterations, or determining that no property-class combinations exceed the threshold.

In some examples, pattern detection is performed using a recursive algorithm that processes the modified knowledge graph data structure in multiple stages. The system receives configuration parameters including relative thresholds for determining significant relationships, maximum iteration counts to limit processing depth, and optionally a set of target classes to focus the pattern detection. During each iteration, the system analyzes the frequency of property-class combinations originating from current class nodes to identify statistically significant connections. The pattern detection process begins by selecting one or more starting class nodes, either from user-specified classes or from all classes in a graph or sub-graph. For each starting node, the system evaluates outgoing property connections and their target class nodes, calculating occurrence frequencies to determine which combinations exceed the configured thresholds. When a qualifying property-class combination is found, the path is extended by adding that combination and setting the target class as the new current node for the next iteration. This recursive extension continues until a stopping condition is met, such as detecting a circular pattern, reaching the maximum iteration count, or finding no qualifying combinations. In some examples, the system maintains both direct and inverse relationships throughout the pattern detection process, enabling more effective pattern detection.

Prior to adjusting a knowledge graph data structure using detected patterns, the system may determine confidence scores for detected patterns by calculating probabilities for relationships within the patterns and combining these probabilities. Patterns may be validated based on their confidence scores. In some implementations, patterns with confidence scores exceeding a threshold may be automatically incorporated into the ontology data structure of the knowledge graph.

In some examples, the system supports both automatic and user-guided pattern validation. A user interface may present detected patterns ordered by confidence scores for manual validation. In other words, the system may automatically raise detected patterns in descending order of confidence for acceptance or rejection. The patterns may be linear patterns that extend an ontology data structure or circular patterns that enable automatic extension of an assertion data structure of the knowledge graph. For example, for circular patterns, the system identifies incomplete patterns in the knowledge graph data structure and generates triple data structures to complete them.

The occurrence threshold used for pattern detection may be varied. In some examples, the occurrence threshold is implemented by assessing relative frequency rather than using an absolute count. For example, when analyzing property-class combinations during pattern detection, to determine whether the occurrence threshold is transgressed, the system calculates relative frequency by dividing the number of occurrences of a particular property connecting to instances of a target class by the total number of instances of the source class. In some examples, for a particular calculation, the occurrence threshold is selected based on, or influenced by, inheritance depth of one or more class nodes involved in the path. The system may present information about generated triple data structures through a user interface and add them to the assertion data structure based on user input.

In some examples, the system provides flexibility in processing scope by allowing selection of specific classes of interest. When processing multiple classes, pattern detection may be performed in parallel. The system can handle both T-Box (ontology) extension (e.g., based on linear patterns) and A-Box (assertion) completion (e.g., based on circular patterns), with configurable thresholds and validation approaches based on pattern confidence and type.

Traditional knowledge graph systems may lack effective mechanisms for automatically detecting and validating recurring patterns in graph structures. Examples described herein provide automated pattern detection through a geometric analysis approach that recursively processes the graph data structure. The system initiates paths from starting class nodes and extends them based on statistical occurrence frequencies that exceed configured thresholds. This enables systematic detection of various types of patterns.

Examples in the present disclosure provide numerous technical benefits. Firstly, techniques in the present disclosure can lower the time a computing system needs to find patterns in data and to grow a knowledge graph, thus saving computing resources and improving overall efficiency. Secondly, techniques in the present disclosure can ensure that pattern quality is increased, such as by detecting and applying complex patterns that could otherwise be difficult to identify or grasp. Thirdly, a knowledge graph system as described herein can increase the ease of use of a knowledge graph system, both for technical and conceptual users thus improving technological adoption.

Furthermore, current knowledge graph computing systems face technical challenges in efficiently analyzing and processing graph structures at scale. The subject matter described herein addresses this technical challenge by implementing a preprocessing approach that, for example, replaces instance nodes with class nodes in the modified knowledge graph data structure, automatically adds inverse relationships, and materializes implicit statements prior to running pattern detection. This can enable more efficient traversal and analysis of the graph topology.

Knowledge graph systems can also face technical challenges in maintaining consistency when extending a graph data structure. The subject matter described herein maintains consistency through a structured pattern application process that handles both linear and circular patterns. For linear patterns, the system incorporates validated patterns into the ontology data structure to extend the schema. For circular patterns, the system identifies incomplete patterns in the knowledge graph data structure and generates triple data structures to complete them while maintaining consistency with the underlying schema. The system can automatically incorporate patterns when confidence scores exceed configured thresholds or present them through a user interface for manual validation.

The disclosed pattern detection approach provides improved accuracy and consistency in knowledge graph completion. By calculating occurrence frequencies at the class level and validating patterns through statistical confidence scoring, the system can automatically detect and apply patterns while maintaining data quality. For circular patterns, this may enable error-free graph completion. In some examples, configurable thresholds and inheritance-based adjustments ensure accurate pattern detection across different levels of the class hierarchy. The system's ability to parallelize pattern detection across different starting classes further improves processing efficiency.

Generally, a knowledge graph is a type of database that maintains knowledge or information in a graph form. A typical knowledge graph includes a plurality of nodes representing objects (also referred to as entities) and a plurality of edges connecting the nodes, where the edges represent properties as relationship between the objects (e.g., is a parent of, is located in, etc.). One common type of knowledge graph is based on the Resource Description Framework (RDF), which models statements of facts or web resources in expressions of the form subject-predicate-object, known as triples, also referred to herein as triple data structures. For example, two nodes connected by an edge can describe a fact, which can be represented as (subject, predicate, object) triples.

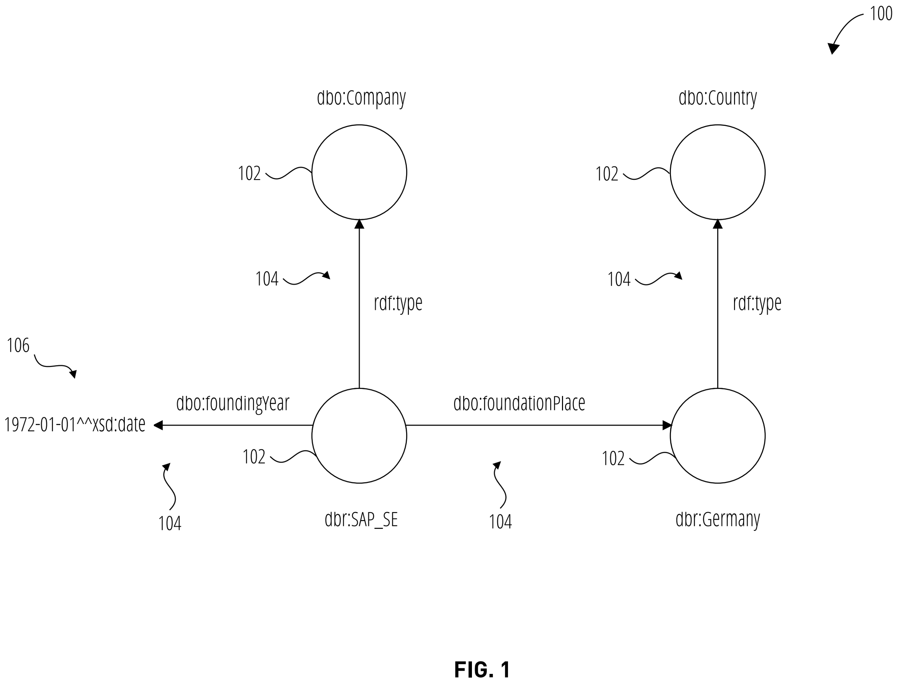

As an example, FIG. 1 shows a portion of a knowledge graph 100 containing four nodes 102 respectively representing objects of "SAP_SE," "Germany," "Company," and "Country." A specific date value "1972-01-01" can also be deemed as a null node 106. The knowledge graph 100 also includes edges 104 with specific properties, such as "rdf:type," "dbo:foundationPlace," and "dbo:foundingYear," which represent relationships between the nodes 102. A knowledge graph can have predefined property prefixes (e.g., DBpedia has property prefixes such as "rdf," "dbo," "dbp," etc.). As shown, several facts can be contained in this knowledge graph, such as (SAP_SE, is a type of, Company), (SAP_SE, has foundation place, Germany), (Germany, is a, Country), and (SAP_SE, has founding year, 1972-01-01).

In some knowledge graphs (e.g., RDF knowledge graphs), it is also possible to apply reasoning to the (subject, predicate, object) triples (e.g., rather than stating explicitly that "Germany" is a country as exemplified in FIG. 1). For example, according to a preconstructed reasoning rule, every object of "dbo:foundationPlace" is a country (by setting the property range). Thus, through reasoning, the triple (dbr:Germany, rdf:type, dbo:Country) can be "reasoned" or "materialized" into a statement of fact: "Germany is a country." Other reasoning rules can be similarly constructed.

Examples of computer-implemented reasoners include OWL (Web Ontology Language) reasoners such as HermiT, Pellet, or Fact++. For example, HermiT is a computing tool that uses a hypertableau reasoning algorithm to infer logical consequences from data encoded in an ontology.

In general, some nodes may represent more specific objects and can be deemed as instances contained in the knowledge graph. For example, "SAP_SE" can be an instance representing a specific company, and "Germany" can be an instance representing a specific country. Some nodes may represent more generic objects and can be deemed as class objects, the aggregation of which can define an ontology of the knowledge graph. The ontology of a knowledge graph may contain the schema or common vocabulary that defines edges and properties of the nodes that are available in the knowledge graph. For example, "Company" is a class object that captures the common concept shared by many individual companies including "SAP_SE," and "Country" is a class object that captures the common concept shared by many individual countries including "Germany." The ontology of the knowledge graph 100 in FIG. 1 would thus define at least the following properties for the instance "SAP_SE": "rdf:type," "dbo:foundationPlace," and "dbo:foundingYear."

Compared to relational databases, a knowledge graph generally has a more flexible data structure because the types of data provided by the knowledge graph can vary. For example, properties associated with different instances can differ even though these instances share the same class object (e.g., "SAP_SE" and "BASF_SE" can have different property data available although they share the same class object "Company"). On the other hand, a relational database can be represented in a knowledge graph format, e.g., the knowledge graph can be a higher-level abstraction of the relational database.

In certain examples, whether a specific node (e.g., "Germany") represents an instance object or a class object can depend on the underlying model or concept. According to one example, whether the term "Germany" belongs to an ontology or is an instance can be determined by checking the rdf:type property: If the type is owl:Class, then it belongs to the ontology; otherwise it is deemed an instance.

In some examples, for a given knowledge graph, an ontology can be created by describing the class objects with a list of properties represented by the edges. The nodes in a knowledge graph can be organized in a hierarchical structure where a lower-level node (representing a more specific object) may be connected to a higher-level node (representing a more generic object) by one or more edges. The lower-level node (or the lower-level object it represents) can be called a descendant of the higher-level node (or the higher-level object it represents), and the higher-level node (or the higher-level object it represents) can be called an ancestor of the lower level node (or the lower-level object it represents). Accordingly, different class nodes in a knowledge graph can have different inheritance depths or levels.

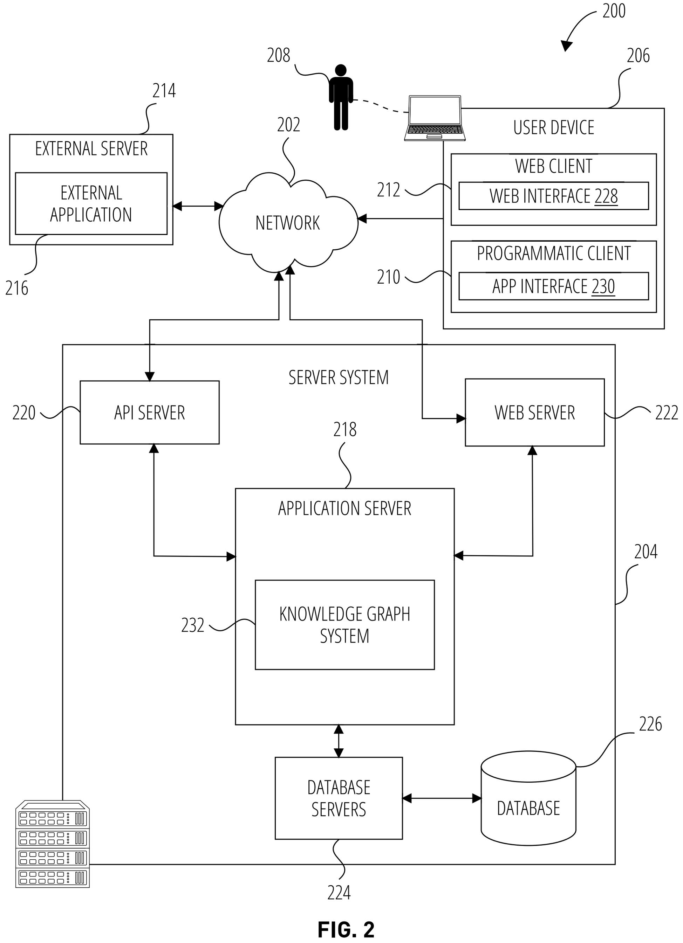

FIG. 2 is a diagrammatic representation of a networked computing environment 200 in which some examples of the present disclosure may be implemented or deployed. One or more servers in a server system 204 provide server-side functionality via a network 202 to a networked device, in the example form of a user device 206 that is accessed by a user 208. A web client 212 (e.g., a browser) or a programmatic client 210 (e.g., an "app") may be hosted and executed on the user device 206.

An Application Program Interface (API) server 220 and a web server 222 provide respective programmatic and web interfaces to components of the server system 204. An application server 218 hosts a knowledge graph system 232, which can include components, modules, or applications.

The user device 206 can communicate with the application server 218 via the web interface supported by the web server 222 or via the programmatic interface provided by the API server 220. It will be appreciated that, although only a single user device 206 is shown in FIG. 2, a plurality of user devices may be communicatively coupled to the server system 204 in some examples. Further, while certain functions may be described herein as being performed at either the user device 206 (e.g., web client 212 or programmatic client 210) or the server system 204, the location of certain functionality either within the user device 206 or the server system 204 may be a design choice.

The application server 218 is communicatively coupled to database servers 224, facilitating access to one or more information storage repositories, such as a database 226. In some examples, the database 226 includes storage devices that store information to be processed by the knowledge graph system 232.

The application server 218 accesses application data (e.g., application data stored by the database servers 224) to provide one or more applications, features, or software tools, such as the knowledge graph system 232, to the user device 206 via a web interface 228 or an app interface 230.

The knowledge graph system 232 accesses and processes knowledge graph data structures to detect and apply patterns. In some examples, the knowledge graph system 232 preprocesses knowledge graph data structures, for example, by replacing instance nodes with class nodes and materializing implicit statements. The knowledge graph system 232 recursively processes the modified knowledge graph data structure to detect patterns by initiating paths from starting class nodes and extending them based on occurrence frequencies.

In some examples, the knowledge graph system 232 calculates confidence scores for detected patterns by determining probabilities for relationships within patterns. The knowledge graph system 232 may automatically apply patterns (e.g., by updating the T-Box or A-Box) when confidence scores exceed configured thresholds or present them through a user interface for validation.

In some examples, the knowledge graph system 232 manages thresholds used during pattern detection, including, for example, adjusting thresholds based on inheritance depth of class nodes. The knowledge graph system 232 enables configuration of processing parameters and presents detected patterns for review through user interfaces. For example, the knowledge graph system 232 can present information and receive user input via the web interface 228 or the app interface 230 of FIG. 2.

In some examples, the application server 218 is part of a cloud-based platform provided by a software provider that allows the user 208 to utilize the knowledge graph system 232. For example, an account holder may access one or more cloud instances to communicate with the knowledge graph system 232.

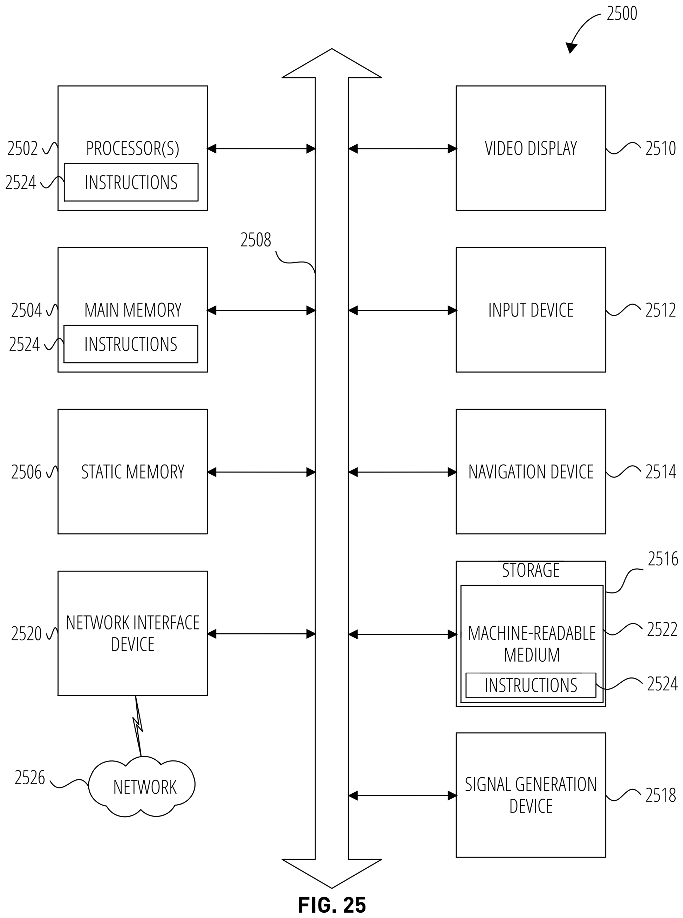

One or more of the application server 218, the database servers 224, the API server 220, or the web server 222 may each be implemented in a computer system, in whole or in part. This can include, for example, a computing environment as described below with respect to FIG. 25. In some examples, external applications, such as an external application 216 executing on an external server 214, can communicate with the application server 218 via the programmatic interface provided by the API server 220. For example, a third-party application may support one or more features or functions on a website or platform hosted by a third party, or may perform certain methodologies and provide input or output information to the application server 218 for further processing or publication.

The network 202 may be any network that enables communication between or among machines, databases, and devices. Accordingly, the network 202 may be a wired network, a wireless network (e.g., a mobile or cellular network), or any suitable combination thereof. The network 202 may include one or more portions that constitute a private network, a public network (e.g., the Internet), or any suitable combination thereof.

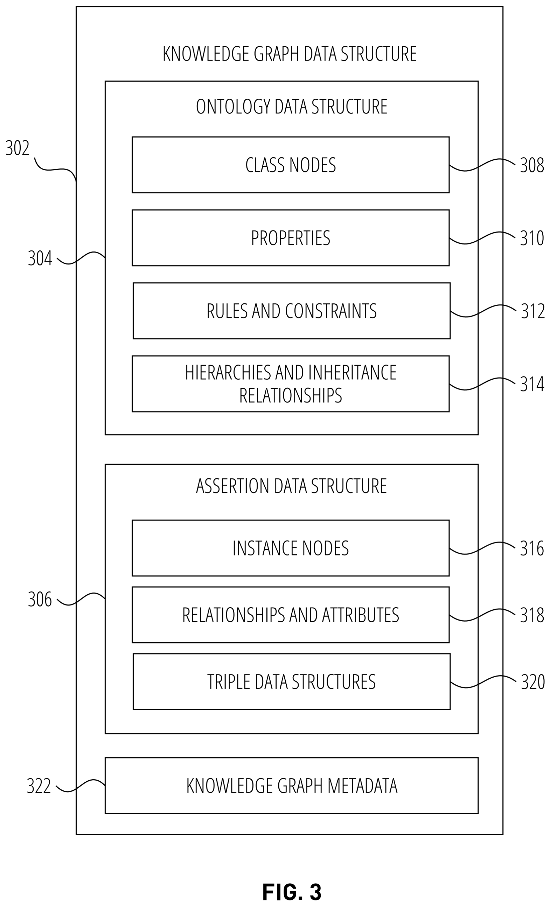

FIG. 3 is a block diagram illustrating components of a knowledge graph data structure 302, according to some examples. The knowledge graph data structure 302 can, for example, be used for data stored in the database 226 of FIG. 2, and can be accessed, processed, and extended by a knowledge graph system such as the knowledge graph system 232 of FIG. 2.

The knowledge graph data structure 302 provides information based on a framework for organizing and storing knowledge graph information. In some examples, the knowledge graph data structure 302 includes both an ontology data structure 304 that defines a schema and vocabulary, and an assertion data structure 306 that contains the instance-level data implementing that schema. The knowledge graph data structure 302 enables systematic organization of information through class-level definitions and instance-level relationships.

The ontology data structure 304 defines the schema, vocabulary, and logical rules that govern the knowledge graph. The ontology data structure 304 is thus associated with the T-Box of the relevant knowledge graph. In some examples, the ontology data structure 304 contains class definitions, property types, rules and constraints, and hierarchical relationships. The ontology data structure 304 may specify domains and ranges for properties, define relationships, and encode logical rules that enable reasoning over the graph data.

In FIG. 3, the ontology data structure 304 is shown to include class nodes 308, properties 310, rules and constraints 312, and hierarchies and inheritance relationships 314. The class nodes 308 represent types or classes of objects/entities within the knowledge graph schema. In some examples, class nodes 308 form hierarchies with inheritance relationships, where subclasses inherit one or more properties, constraints, or metadata from their parent classes.

The properties 310 define the types of relationships that can exist between nodes in the knowledge graph. In some examples, properties 310 include object properties that connect nodes and datatype properties that associate nodes with literal values. Properties 310 may have defined domains specifying valid source classes and ranges specifying valid target classes.

The rules and constraints 312 govern how the knowledge graph components can be connected and used. In some examples, rules and constraints 312 include data such as domain and range restrictions for properties, cardinality constraints, or logical rules enabling inference of new facts. In some examples, the rules and constraints 312 help maintain consistency and enable reasoning over the graph structure.

The hierarchies and inheritance relationships 314 establish organizational structure between classes. In some examples, hierarchies and inheritance relationships 314 enable subclasses to inherit properties, constraints, or metadata from parent classes while potentially adding their own specialized characteristics. The inheritance depth of classes in these hierarchies may affect how patterns are detected and validated.

The assertion data structure 306 is shown to include instance nodes 316, relationships and attributes 318, and triple data structures 320. The assertion data structure 306 is thus associated with the A-Box of the relevant knowledge graph. The assertion data structure 306 implements the schema defined by the ontology data structure 304 to store and organize instance-level information in the knowledge graph. The assertion data structure 306 may store both explicit statements and materialized implicit statements derived through reasoning over the ontology rules.

The instance nodes 316 represent specific entities or instances within the knowledge graph. In some examples, instance nodes 316 are connected to their corresponding class nodes through type relationships, allowing the system to identify the classes that each instance belongs to. For example, an instance node may represent a specific painting such as "Mona Lisa" that is an instance of the "Painting" class.

The relationships and attributes 318 connect instance nodes according to the properties defined in the ontology data structure. In some examples, relationships and attributes 318 implement the object properties that link instances, while attributes store literal values associated with instances. Relationships may be unidirectional or bidirectional.

The triple data structures 320 store fundamental subject-predicate-object statements that comprise the knowledge graph. Examples are described, for example, with reference to FIG. 1. In some examples, triple data structures 320 represent both explicit relationships stated directly in the data and implicit relationships derived through reasoning. When patterns are detected, new triple data structures 320 may be generated by the knowledge graph system 232 to complete incomplete patterns while maintaining consistency with the ontology data structure 304.

The knowledge graph data structure 302 may further include knowledge graph metadata 322. The knowledge graph metadata 322 may include configuration information or statistics about the knowledge graph data structure 302. In some examples, the knowledge graph metadata 322 includes occurrence frequencies for property-class combinations, confidence scores for detected patterns, and other statistical information used during pattern detection and validation. The knowledge graph metadata 322 may also store system configuration parameters such as thresholds and processing options to be implemented by the knowledge graph system 232.

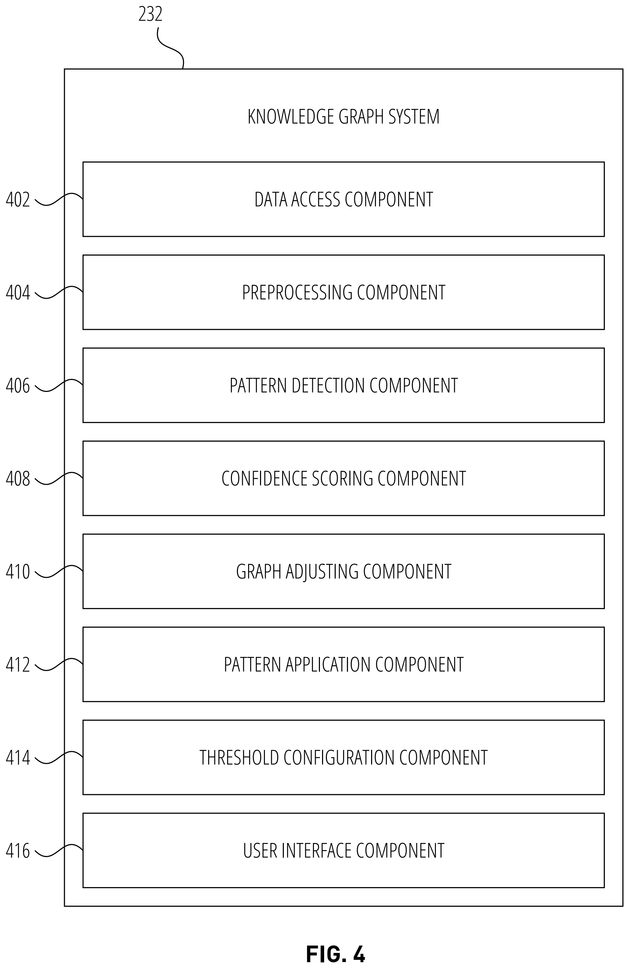

FIG. 4 is a block diagram illustrating components of the knowledge graph system 232 of FIG. 2, according to some examples. The knowledge graph system 232 is shown to include a data access component 402, a preprocessing component 404, a pattern detection component 406, a confidence scoring component 408, a graph adjusting component 410, a pattern application component 412, a threshold configuration component 414, and a user interface component 416. In some examples, the knowledge graph system 232 operatively manages, processes, adjusts, or extends a graph data structure such as the knowledge graph data structure 302 of FIG. 3.

The data access component 402 accesses and retrieves knowledge graph data structures stored in a data store (e.g., accesses the knowledge graph data structure 302 from the database 226). In some examples, the data access component 402 may access both an ontology data structure (e.g., the ontology data structure 304) that defines the schema and vocabulary as well as an assertion data structure (e.g., the assertion data structure 306) containing instance-level data. The data access component 402 may selectively access specific subgraphs or the complete knowledge graph data structure 302 based on configuration parameters.

The preprocessing component 404 is configured to generate a modified knowledge graph data structure by performing preprocessing operations. This can include replacing instance nodes that represent information in the knowledge graph with class nodes. In some examples, the preprocessing component 404 also materializes implicit statements based on the ontology data structure 304 using a reasoning engine. The preprocessing component 404 may also add inverse relationships for properties that do not have defined inverses to enable bidirectional traversal of the knowledge graph data structure 302.

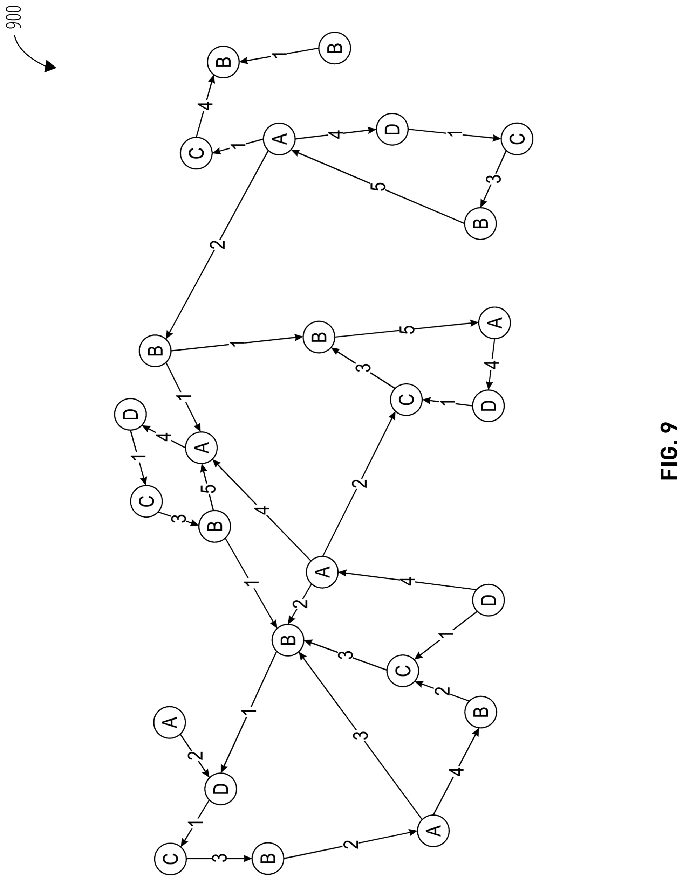

The pattern detection component 406 is configured to recursively process the modified knowledge graph data structure to detect patterns. In some examples, the pattern detection component 406 initiates paths from starting class nodes and extends them based on property-class combinations that exceed configured occurrence thresholds. The pattern detection component 406 implements a geometric analysis approach that examines structural relationships between class nodes, as illustrated, for example, in FIG. 9 through FIG. 20.

The confidence scoring component 408 determines confidence scores for detected patterns by calculating probabilities for relationships within patterns. In some examples, the confidence scoring component 408 combines individual relationship probabilities to generate an overall confidence score for each pattern. These scores may be used to validate patterns before they are applied to extend a knowledge graph.

The graph adjusting component 410 modifies a knowledge graph data structure based on validated patterns. In some examples, and with reference to FIG. 3, the graph adjusting component 410 incorporates linear patterns into the ontology data structure 304 by adding new rules or constraints, while for circular patterns, the graph adjusting component 410 identifies incomplete patterns in the knowledge graph data structure 302 and generates triple data structures 320 to complete or extend the assertion data structure 306 while maintaining consistency with the schema. In some examples, the pattern application component 412 automatically adjusts a knowledge graph when the confidence score for a particular pattern exceeds a threshold.

The pattern application component 412 implements patterns to extend a knowledge graph data structure on an ongoing basis. For example, as new data is added to the knowledge graph data structure 302, the pattern application component 412 applies existing patterns (e.g., validated patterns) to ensure that the knowledge graph is continuously extended. In some examples, the pattern application component 412 automatically applies patterns when their confidence scores exceed configured thresholds.

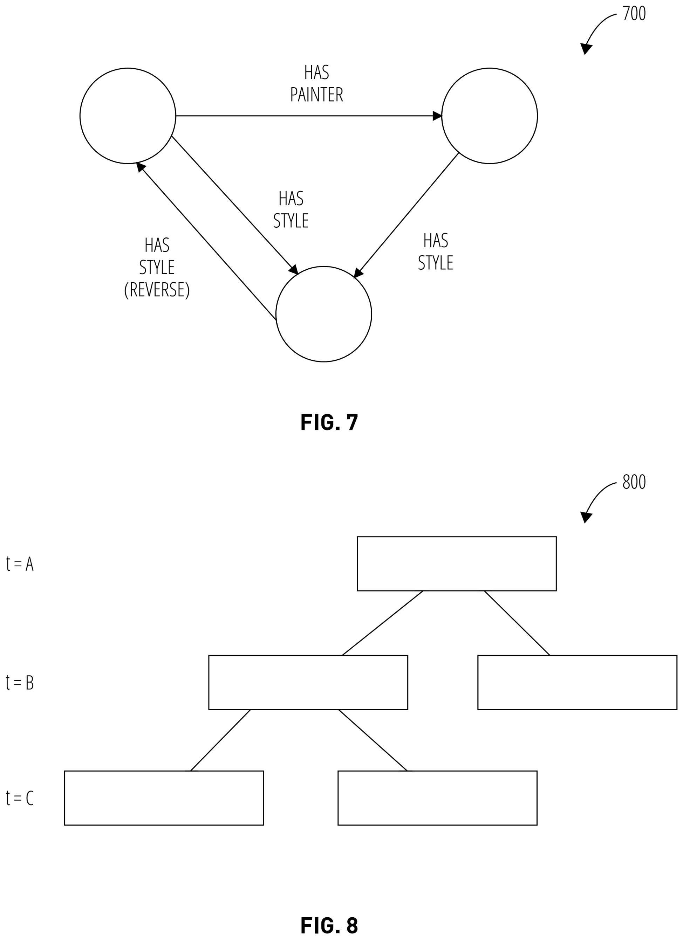

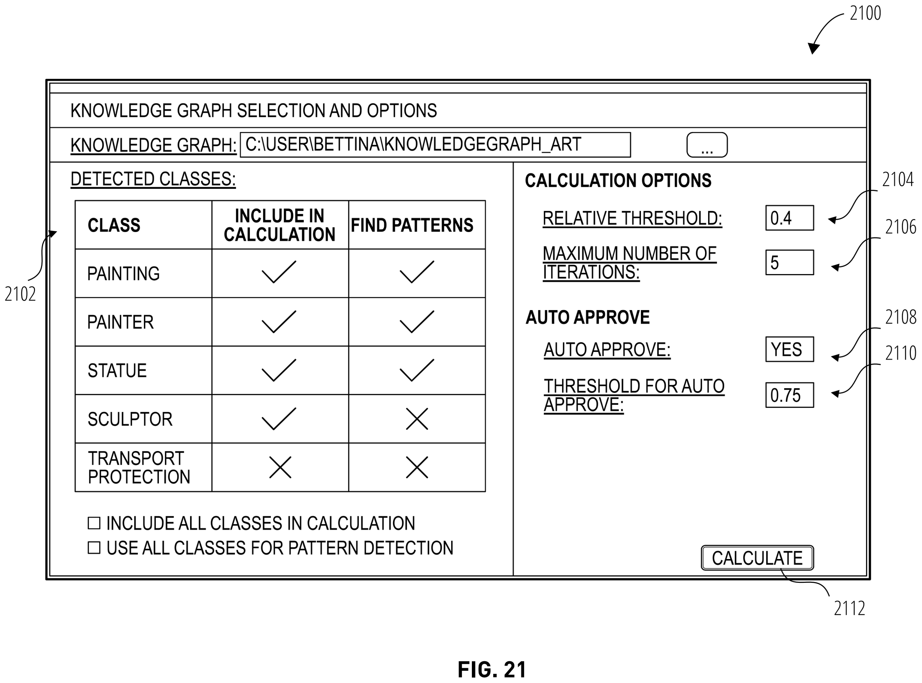

The threshold configuration component 414 manages thresholds used during pattern detection and validation. In some examples, the threshold configuration component 414 adjusts occurrence thresholds based on inheritance depth of class nodes to account for different levels of pattern generality, as shown, for example, in FIG. 8. The threshold configuration component 414 may also configure confidence thresholds that determine whether patterns are automatically incorporated or require manual validation, as referenced in the user interface examples in FIG. 21 through FIG. 23.

The user interface component 416 enables the user 208 to interact with the knowledge graph system 232 in an effective manner. For example, the user interface component 416 enables configuration of the knowledge graph system 232 and interaction with detected patterns. In some examples, the user interface component 416 presents detected patterns ordered by confidence scores and allows users to manually validate patterns before they are applied. The user interface component 416 may display pattern details including involved triples, occurrence frequencies, and examples of matching instances. One or more interfaces may allow users to configure processing parameters such as thresholds and class selection.

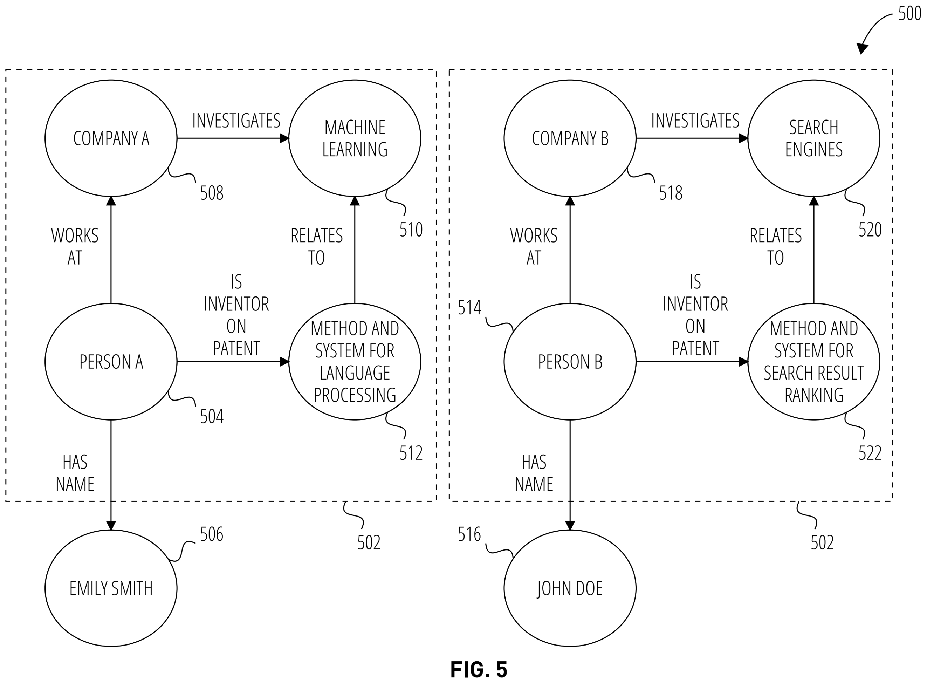

FIG. 5 is a diagrammatic representation of a knowledge graph pattern, according to some examples. FIG. 5 shows part of a knowledge graph 500 that has an example pattern 502, and illustrates relationships between companies, persons, and their associated attributes.

Two structures in the knowledge graph 500 are shown in parallel to illustrate how the pattern 502 is determined to repeat within the knowledge graph 500. The first structure includes Person A (node 504) who works at Company A (node 508). Person A (node 504) is an inventor on a patent entitled "Method and System for Language Processing" (node 512) that relates to "Machine Learning" (node 510). Company A (node 508) investigates "Machine Learning" (node 510), demonstrating a relationship between the company's research interests and the patent listing the employee as inventor.

The second, parallel structure shows Person B (node 514) who works at Company B (node 518). Person B (node 514) is an inventor on a patent "Method and System for Search Result Ranking" (node 522) that relates to "Search Engines" (node 520). Company B (node 518) investigates "Search Engines" (node 520), showing a similar pattern of relationships between company research areas and patents involving their employees.

The pattern 502 is enclosed by dashed lines to indicate it represents a detected repeating pattern in the knowledge graph 500. Emily Smith (node 506) and John Doe (node 516) represent the specific instance names associated with Person A and Person B, respectively. The present disclosure describes examples that show how the knowledge graph system 232 can detect such patterns, including from complex data structures, thus making it easier to infer new relationships or validate existing ones in a knowledge graph.

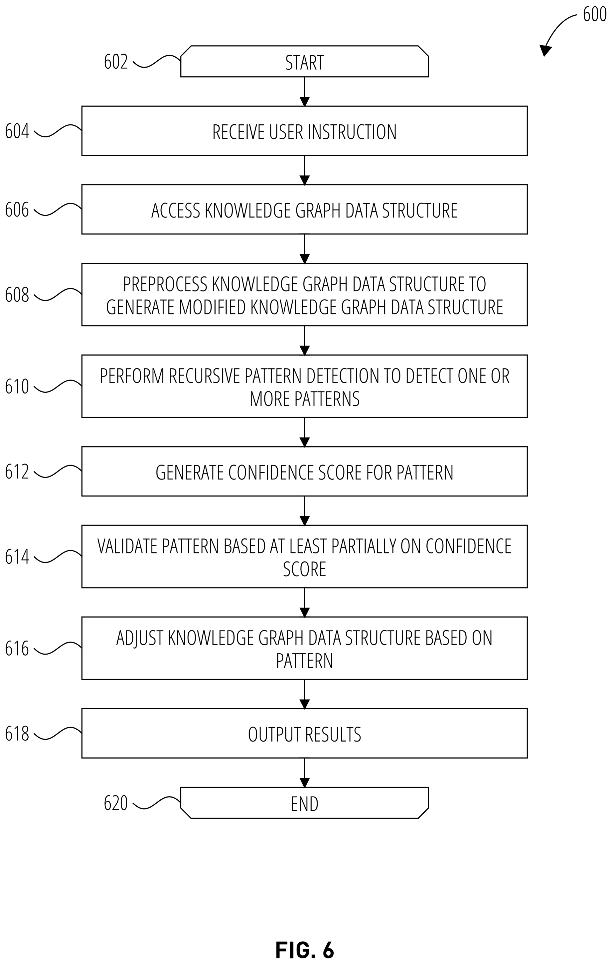

FIG. 6 is a flowchart illustrating operations of a method 600 for pattern detection and application in a knowledge graph, according to some examples. The operations are described, by way of example, with reference to components of the knowledge graph system 232 of FIG. 2 and the knowledge graph data structure 302 of FIG. 3. Although the method 600 depicts a particular sequence of operations, the sequence may be altered without departing from the scope of the present disclosure. For example, some of the operations depicted may be performed in parallel or in a different sequence that does not materially affect the function of the method 600. In some examples, different components of the knowledge graph system 232 may perform functions at substantially the same time or in a specific sequence.

The method 600 starts at opening loop element 602. At operation 604, the data access component 402 of the knowledge graph system 232 receives user instructions that may include configuration parameters such as occurrence thresholds and class selections. It is noted that configuration parameters may be user-provided, set at a system level, or a combination thereof.

At operation 606, the data access component 402 accesses a knowledge graph data structure, such as the knowledge graph data structure 302. At operation 608, the preprocessing component 404 preprocesses the knowledge graph data structure to generate a modified knowledge graph data structure. In some examples, the preprocessing may include replacing instance nodes in the knowledge graph with class nodes, materializing implicit statements, and adding inverse relationships for properties. In some examples, the knowledge graph system 232 operates on a duplicate of an input graph for pattern detection and then starts the preprocessing on the duplicate.

In some examples, the preprocessing component 404 materializes all implicit statements by leveraging a reasoner and adds them to the graph. After replacing instance nodes with their corresponding classes, the preprocessing component 404 then adds the inverse to every property that does not have an inverse property and adds these additional triples to the graph to enable better traversal during pattern detection.

At operation 610, the pattern detection component 406 performs recursive pattern detection. The pattern detection process can involve initiating paths from one or more starting class nodes and extending each path individually based on property-class combinations that exceed configured occurrence thresholds. For each starting class node, the recursive processing continues until a stopping condition is met for that particular path, such as detecting a circular pattern, reaching a maximum number of iterations, or determining that no property-class combinations exceed the threshold for the current node in that path.

The knowledge graph system 232 may measure relative frequency against the occurrence threshold to determine whether a property-class combination should be included in the pattern. For example, if a "Painting" class has 100 instances and 80 of them have a "hasPainter" relationship to a "Painter" class, the relative frequency would be 0.8 (80%). If the configured threshold is 0.75, this relationship would exceed the threshold and be included. This approach ensures that the knowledge graph system 232 identifies meaningful patterns regardless of the absolute number of instances in different parts of the knowledge graph data structure.

At operation 612, the confidence scoring component 408 generates confidence scores for detected patterns by calculating probabilities for relationships within patterns and combining these probabilities. At operation 614, the confidence scoring component 408 validates patterns based on their confidence scores. In some examples, patterns may be automatically validated when their confidence scores exceed configured thresholds, with different thresholds potentially applied based on the inheritance depth of class nodes involved in each path, as illustrated in FIG. 8.

At operation 616, the graph adjusting component 410 adjusts the knowledge graph data structure 302 based on validated patterns and the pattern application component 412 applies patterns to extend the information provided by the knowledge graph. For linear patterns, for example, these components add rules to the ontology data structure 304. For circular patterns, they identify incomplete patterns in the knowledge graph data structure 302 and generate triple data structures 320 to complete them. In other words, the knowledge graph system 232 can thus add detected patterns to the T-Box of the relevant knowledge graph, complete or extend the A-Box of the graph based on the detected patterns, or both.

At operation 618, the user interface component 416 outputs results, which may include displaying detected patterns, confidence scores, and newly added relationships. Suitable interfaces allow users to review and potentially modify the detected patterns before they are applied to the knowledge graph data structure 302. The method 600 ends at operation 620.

A more detailed, non-limiting example of operation 610 of the method 600 is provided below to illustrate certain aspects of pattern detection. In this example, the pattern detection process begins by accessing the preprocessed knowledge graph where instance nodes have been replaced with their corresponding class nodes and inverse relationships have been added. For a particular class in question, the knowledge graph system 232 initiates pattern detection from a configured starting class node, which may be selected through user input specifying a class of interest from the available class nodes in the graph.

From the starting class node, the knowledge graph system 232 analyzes all possible property-class combinations emanating from that node. For each property-class combination, the knowledge graph system 232 calculates an occurrence frequency by determining how often that particular property connects to instances of the target class across the knowledge graph. As mentioned, this can be expressed as a relative frequency. The knowledge graph system 232 then compares each calculated frequency against a configured occurrence threshold, which may be dynamically selected based on the inheritance depth of the class nodes involved in the relationship.

When a property-class combination's occurrence frequency exceeds the threshold, the knowledge graph system 232 extends the current path by adding this combination and sets the target class node as the new current node for the next iteration. This process continues recursively, with each iteration analyzing property-class combinations from the current node and extending the path with combinations that exceed the threshold.

The recursive path extension process may incorporate validation checks at each step. For example, the knowledge graph system 232 maintains tracking of visited nodes and relationships to detect when a path forms a circular pattern. Additionally, the knowledge graph system 232 monitors the iteration count against a configured maximum to prevent infinite recursion, and continuously evaluates whether any property-class combinations from the current node exceed the occurrence threshold.

During pattern detection, the knowledge graph system 232 also handles implicit relationships that were materialized during preprocessing. These relationships, derived from the ontology structure, are considered alongside explicit relationships when calculating occurrence frequencies and extending paths. The knowledge graph system 232 processes both direct relationships and their inverse counterparts, which were added during preprocessing, ensuring comprehensive pattern detection in both directions through the graph.

Once a stopping condition is reached, the system finalizes the pattern and prepares it for validation and potential incorporation into the knowledge graph structure. In some examples, as patterns are detected, the knowledge graph system 232 calculates confidence scores by determining probabilities for each relationship within the pattern and combining these probabilities. These scores are used to rank patterns and determine whether they can be automatically incorporated into the knowledge graph structure or require manual validation.

As an example, for a detected pattern represented as a path (v₁, e₁, v₂, e₂, ...), where v represents vertices (nodes) and e represents edges (relationships), the knowledge graph system 232 calculates the probability of the entire path by multiplying the individual probabilities of each relationship segment. The path probability can thus be expressed as: *Pₚₐₜₕ = p(v₁, e₁, v₂) * p(v₂, e₂, v₃)* * ..., where each component probability represents how frequently that particular relationship occurs in the knowledge graph.

The knowledge graph system 232 can use these calculated confidence scores to determine how patterns should be processed. In some examples, the knowledge graph system 232 implements a configurable threshold approach that governs pattern validation and application. When a pattern's confidence score exceeds a configured threshold value (where the threshold ∈ (0, 1)), the pattern may be automatically approved without requiring manual review. Conversely, patterns with confidence scores below the threshold are presented to users for manual validation.

The threshold configuration component 414 allows for flexible governance policies regarding pattern validation. Setting the threshold to 1.0 ensures that all patterns require manual review regardless of their confidence score, providing maximum oversight for knowledge graph modifications. Alternatively, setting the threshold to 0.0 enables fully automatic pattern approval, allowing the knowledge graph system 232 to incorporate all detected patterns without manual intervention.

The pattern detection process performed by the knowledge graph system 232 may leverage parallel processing capabilities to efficiently analyze and detect patterns across the knowledge graph structure. In some examples, multiple starting class nodes may be processed concurrently, with each node potentially initiating its own pattern detection path through the graph.

The system may maintain multiple active paths from each starting node. When a property-class combination exceeds the occurrence threshold, the system may explore multiple branching paths. Such multi-path exploration could enable the discovery of diverse pattern structures within the same region of the graph.

In some implementations, the architecture of the knowledge graph system 232 may support concurrent pattern validation and scoring across multiple detected patterns. Parallel processing may extend to pattern application. Once patterns are validated, the knowledge graph system 232 may simultaneously incorporate multiple patterns into the knowledge graph structure.

Code snippets for an example pattern detection algorithm are shown and then discussed below. It is noted that the algorithm can be applied either for one class only or for multiple classes during operation of the knowledge graph system 232.

```
  # We check optional parameter C for the classes of interest
  IF isEmpty(C) THEN
      C = G.getAllClasses()
  result_patterns = new Set()
  FOR EACH c IN C DO:
  # t is the threshold and i is the max number of iterations
  # note that the set avoids adding duplicates
  # current _it is the current iteration depth (starting with 0)
  # g is the working graph
      Paths = new Set()
      Paths.add(c)
      result_patterns.addAll(
          runPatternDetection(Paths, t, i, current _it = 0, g)
  METHOD runPatternDetection(Paths, t, i, current_i, g)
      wasPathAdded = false
      FOR EACH path IN Paths DO
          IF isCircle(path) THEN
              CONTINUE
          FOR EACH property IN g.getProperties() DO
              FOR EACH class IN g.getClasses() DO
                  occurrence = count all _occurrences (
  path.getLastClass(), property, class)
                  relative = occurrence /
  count_all(path.getLastClass())
                  # t is the relative threshold
                  IF relative < t THEN
                      g.removeAllTriples(subject=c,
  predicate=property, object=class)
                  ELSE:
                           path.add(property, class)
                           wasPathAdded = true
          current_i = current_i + 1
          IF current_i = i OR wasPathAdded == false:
              RETURN Paths
          ELSE:
              RETURN runPatternDetection(Paths=Paths, t=t, i=i,
  current_i=current_i, g=g))
```

The above code implements a pattern detection algorithm, according to some examples, for analyzing and processing knowledge graph structures. The algorithm begins by checking for an optional parameter *C* that specifies classes of interest. If *C* is empty, it retrieves all classes from the graph *G* using *getAllClasses().* This initialization ensures the algorithm can process either specific classes or the entire graph structure.

A main processing loop iterates through each class c in the set of classes *C*. For each class, it initializes a new *Set* called *Paths* that starts with the current class *c*. The algorithm then calls *runPatternDetection* with several parameters: the *Paths* set, a threshold value *t*, maximum iterations i, the current iteration depth (starting at 0), and a working graph g. It is noted that the working graph may be a duplicate of the graph structure, as discussed elsewhere herein.

The *runPatternDetection* method implements pattern detection logic. For each path, it first checks if the path forms a circle using *isCircle(path).* This implements a stopping condition for detecting a circular pattern. The method then examines each property-class combination by iterating through all relevant properties and classes in the graph. For each combination, it calculates both the absolute occurrence count and relative frequency.

A threshold checking mechanism is shown: if the relative frequency falls below the threshold t (which can be set to different values, e.g., adjusted depending on the inheritance depth of the class or classes being analyzed in a particular iteration), those triples are removed from the graph. Otherwise, the property-class combination is added to the path and the *wasPathAdded* flag is set to true. This implements the approach of extending paths with property-class combinations that exceed an occurrence threshold.

The recursive nature of the algorithm is handled through the final section of the example shown, where it either returns the current *Paths* (if maximum iterations *i* is reached or no new paths were added) or makes a recursive call to continue pattern detection. This recursive extension continues until an appropriate stopping condition is met. The algorithm maintains state through the *current_i* parameter to track iteration depth and uses the *wasPathAdded* flag to determine if further processing is needed.

As mentioned, the pattern detection process can identify two distinct types of patterns: linear patterns and circular patterns. For linear patterns, the knowledge graph system 232 focuses on sequences of relationships that consistently occur together. For circular patterns, the knowledge graph system 232 identifies loops in the relationship chain that suggest implicit relationships between entities.

The knowledge graph system 232 distinguishes between these two pattern types based on their structure and application. Linear patterns, such as "A -has-> B -isOf-> C" (for example, "Cars have tires which are made of gum"), represent ontological patterns that can potentially be added to the ontology data structure 304 to extend the schema. These linear patterns make facts explicit but do not necessarily cause generation of new instance-level triples. Circular patterns, such as "A -lives_in-> B -was_drawn-> C -drawn_by-> A" (for example, "Artist A lives in City C where picture P was drawn by Artist A"), form loops in the relationship chain that can be used for auto-completion of the knowledge graph by generating new triple data structures 320 to complete similar but incomplete patterns found elsewhere in the graph.

FIG. 7 is a diagrammatic representation illustrating a circular pattern 700, according to some examples. FIG. 7 illustrates an example detected within a knowledge graph structure that demonstrates relationships between artistic entities. The pattern shows three interconnected nodes linked by directional edges representing specific relationships: "HAS PAINTER" connecting the first node to the second, "HAS STYLE" connecting both the first and second nodes to the third node, and a reverse "HAS STYLE" relationship completing the circle back to the first node. This circular structure represents a common pattern where paintings, painters, and artistic styles are interconnected through consistent relationships.

The detected circular pattern exemplifies how the knowledge graph system 232 may use certain recurring relationship structures within the knowledge graph. When such a pattern is detected with sufficient occurrence frequency and confidence scoring, it may be used to extend the assertion data structure of the knowledge graph by generating new triple data structures that complete similar but incomplete patterns found elsewhere in the graph.

In some examples, and unlike with geometric circles, the detected circular patterns in the knowledge graph have distinct start and end points that enable directional reasoning about relationships. For example, in the pattern 700, while it may be logically valid to infer a painting's artistic style from the style associated with its painter, the reverse inference (determining a painting's artist based solely on matching artistic styles) may not be reasonable or valid. This directionality in circular patterns allows the knowledge graph system 232 to maintain logical consistency when applying patterns for knowledge graph completion. The same circular structure may be analyzed from multiple entry points, enabling different valid inference paths through the same set of relationships, while still preserving the logical constraints on which inferences are reasonable to make based on the directionality of the relationships.

FIG. 8 is a diagrammatic representation illustrating an inheritance tree 800, according to some examples. The inheritance tree 800 demonstrates how a threshold value t used in pattern detection, can be dynamically adjusted based on inheritance depth within a knowledge graph.

In FIG. 8, the inheritance tree 800 shows different threshold values that may be applied at different levels of inheritance, with *t=A* at the highest level, *t=B* at an intermediate level, and *t=C* at the lowest level. This adjustment of threshold values may reflect the approach to handling statements of varying generality within the inheritance hierarchy.

In some implementations, the threshold value t may be modified using a limiting factor *L,* where a new threshold (*t_new*) may equal *L* multiplied by the old threshold (*t_old*) as the knowledge graph system 232 traverses the knowledge graph (subject, for example, to a maximum *t* value). For example, moving from a node at the lowest level, a new threshold for a node at a new level can be calculated as *t_new* = *L * t_old,* and the limiting factor *L* for determining the new threshold can be calculated based on the maximum depth of the inheritance tree 800 and the distance to the highest level, using a formula such as *L* = *1* + *( 1* - *0.5^(max_depth-distance_to_highest_level),* where *t_new* = *MIN(t_old*L*, *1)*. Accordingly, in some examples, and using the three levels of the inheritance tree 800 to illustrate, the knowledge graph system 232 can implement an adjustable threshold such that higher inheritance levels (e.g., level A or B relative to level C) have higher thresholds applied thereto.

Application of stricter thresholds to higher, more general levels (e.g., "punishing" the top level or levels in the hierarchy) may help manage the risk associated with broader statements that affect many triples in a knowledge graph, as these general statements might have a higher likelihood of being incorrect. However, the threshold value t can be adjusted or varied in numerous ways and the aforementioned limiting factor *L* is merely an example.

FIGs. 9-20 visualize progressive stages of pattern analysis and detection in a knowledge graph data structure, according to some examples. In the data visualizations of FIGs. 9-20, letters represent class nodes and numbered edges represent different property types between the class nodes. These figures illustrate progressive steps of a process performed, for example, by the knowledge graph system 232. Initially, the knowledge graph system 232 begins with a complex interconnected graph structure with nodes (labeled A, B, C, and D) connected by edges (numbered 1, 2, 3, 4, and 5) representing different relationships. The process operates by analyzing the frequency of connections between specific nodes, with solid lines representing direct relationships and dashed lines showing inverse relationships that may be added during preprocessing.

As the visualization progresses through the figures, it is shown that the knowledge graph system 232 recursively evaluates paths between nodes based on occurrence thresholds, gradually identifying and highlighting statistically significant patterns while removing or ignoring less relevant connections. The process culminates in a discovered pattern that met the configured criteria. Accordingly, FIGs. 9-20 visualize one example of the *runPatternDetection* algorithm described above. It is noted that FIGs. 9-20 merely show, for illustrative purposes, the detection of one pattern from a single starting class node (in this case, class A selected from classes A to D). The knowledge graph system 232 can operate to repeat a similar process for various classes and may detect multiple different patterns in this manner.

Referring now more specifically to the data visualizations, FIG. 9 shows a data visualization 900, illustrating a first stage. The visualization shows the knowledge graph after instance nodes have been replaced with their corresponding class nodes (labeled A, B, C, and D). The numbered edges between nodes represent different property types.

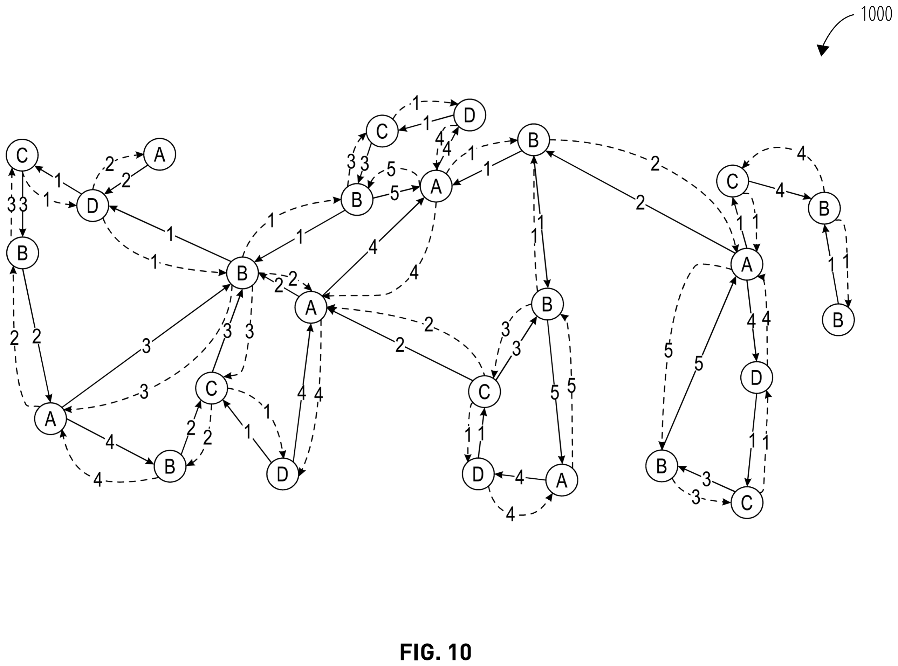

FIG. 10 shows a further data visualization 1000 for the pattern detection process, illustrating a following stage. FIG. 10 shows preprocessing in which the knowledge graph system 232, for each existing relationship (shown as solid numbered lines), adds corresponding inverse relationships (shown as dashed numbered lines) in the opposite direction. For example, where a solid line with number 4 connects from one node to another, a dashed line with number 4 has been added in the reverse direction to illustrate the inverse property. In other words, the knowledge graph system 232 adds a "reverse relationship" corresponding to "relationship 4." This could, for instance, be the reverse "HAS STYLE" relationship corresponding to the "HAS STYLE" relationship as depicted in FIG. 7.

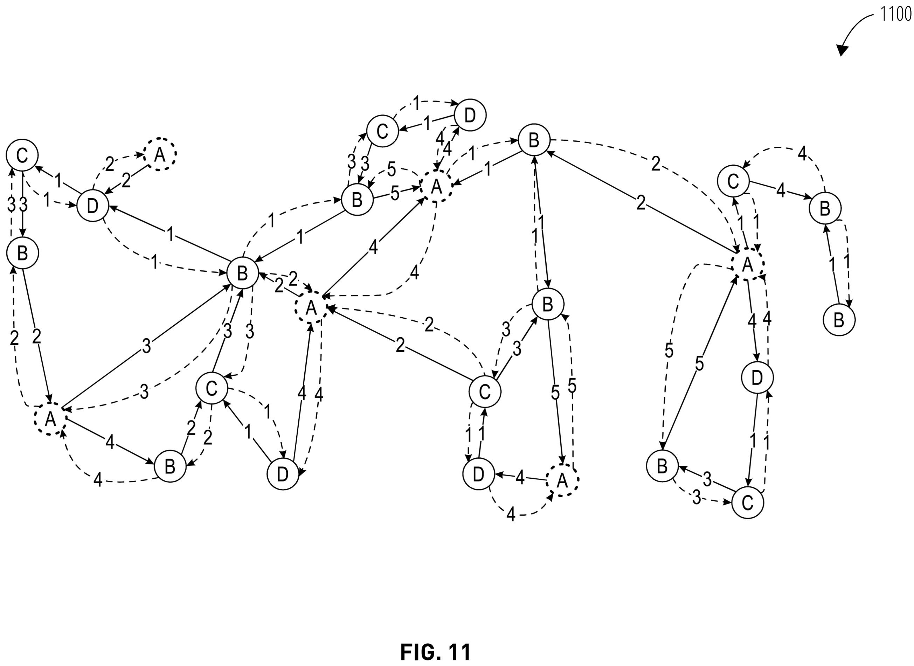

As an illustrative example, the user (e.g., the user 208) has selected class A (e.g., via a user interface such as the web interface 228 of FIG. 2). FIG. 11 shows further data visualization 1100 for the pattern detection process, illustrating a further stage in which the knowledge graph system 232 detects all nodes of class A (as shown by the dashed lines in FIG. 11).

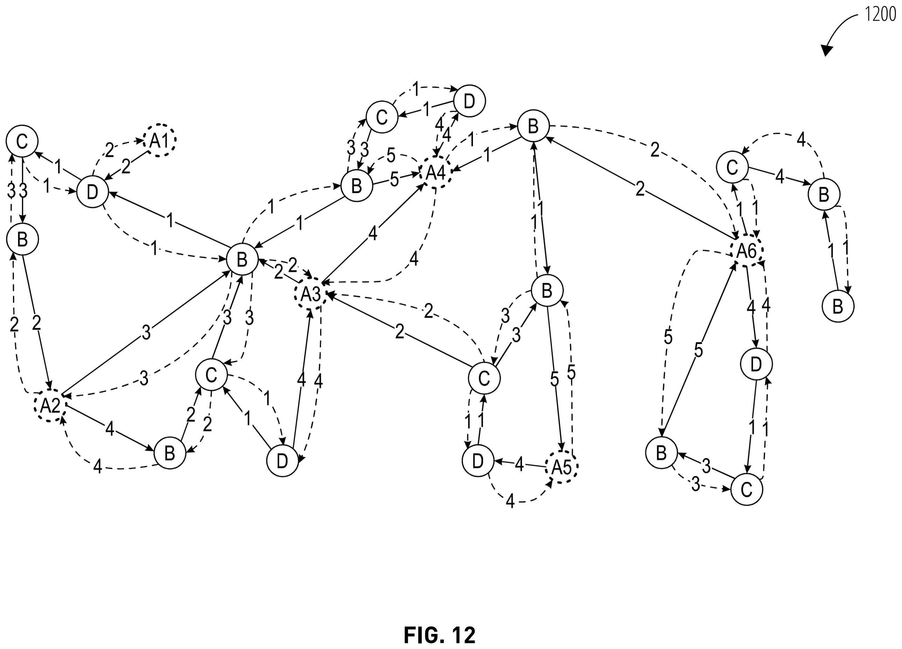

The knowledge graph system 232 will begin analyzing the relationships extending from these user-selected starting nodes, considering both direct and inverse relationships to identify potential patterns. As depicted in a further data visualization 1200 in FIG. 12 by the labeling A1-A6, the six class A nodes will thus serve as the initial starting class node from which the recursive pattern detection will begin, based on the user's class selection.

The knowledge graph system 232 calculates occurrences relevant to class A. Specifically, in this example, the knowledge graph system 232 evaluates property-class combinations extending from nodes A1-A6 by calculating occurrence frequencies for different numbered edge combinations. The knowledge graph system 232 determines which combinations exceed configured thresholds to identify a statistically significant pattern.

It is noted that, mainly for the sake of simplicity, absolute numbers rather than the relative numbers are calculated in this example. This is based on the assumption that the graph contains an equal distribution of the number of classes.

In this example, the knowledge graph system 232 first detects that the following edges are statistically significant when viewed from nodes A1-A6:
- Edge number 4 extends from 5 out of 6 of the nodes A1-A6; and
- Edge number reverse 5 extends from 3 out of 6 of the nodes A1-A6.

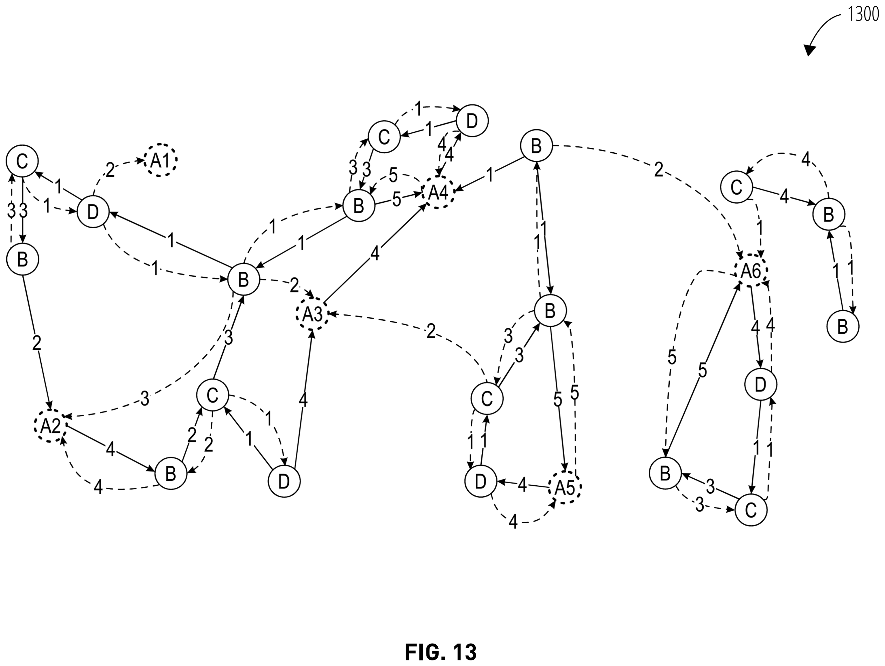

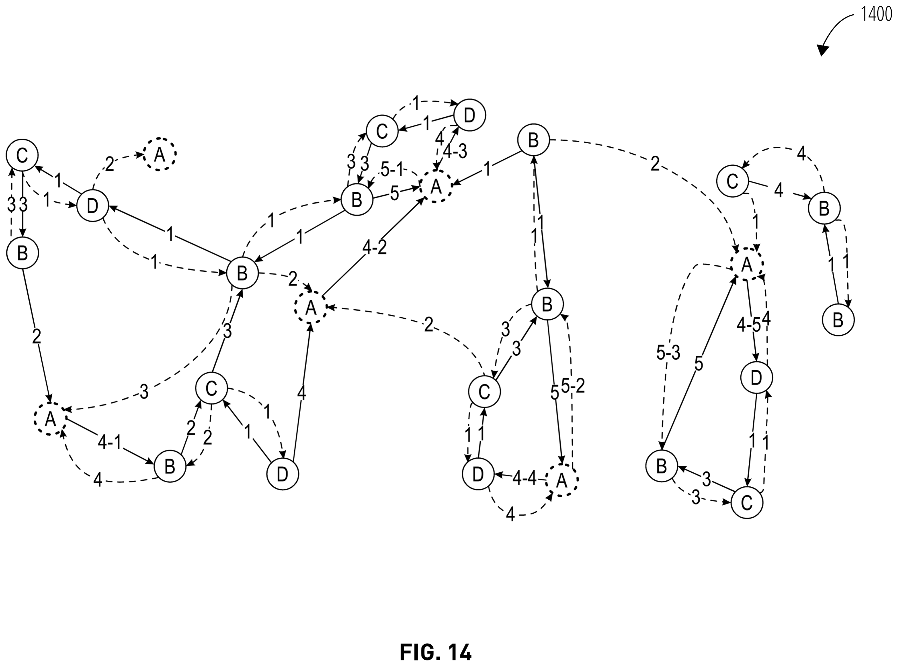

In a further data visualization 1300 as shown in FIG. 13, outgoing edges of nodes in focus that are below the threshold are not shown. Furthermore, the relevant detections related to edge number 4 and edge number reverse 5 are visualized (e.g., 4-1, 4-2, 4-3, 5-1, 5-2, etc.) in a further data visualization 1400 shown in FIG. 14.

The knowledge graph system 232 checks the relevant property-class combinations related to edge number 4 and edge number reverse 5, and detects the following:
- Edge number 4 extends to class D from 3 out of 6 of the nodes A1-A6; and
- Edge number reverse 5 extends to class B from 3 out of 6 of the nodes A1-A6.

In other words, for 50% of the nodes A1-A6, there is a property-class combination of 4-D creating a possible path from A-D, and for 50% of the nodes A1-A6, there is a property-class combination of 5-B, creating a possible path from A-B. Assuming a threshold of 3 (e.g., at least 3 of the same property-class combination needed for the current class node), the knowledge graph system 232 determines that the path is to be extended using these combinations. All other property-class combinations associated with the nodes A1-A6 do not meet the threshold of 3 and are thus disregarded by the knowledge graph system 232 at this stage.

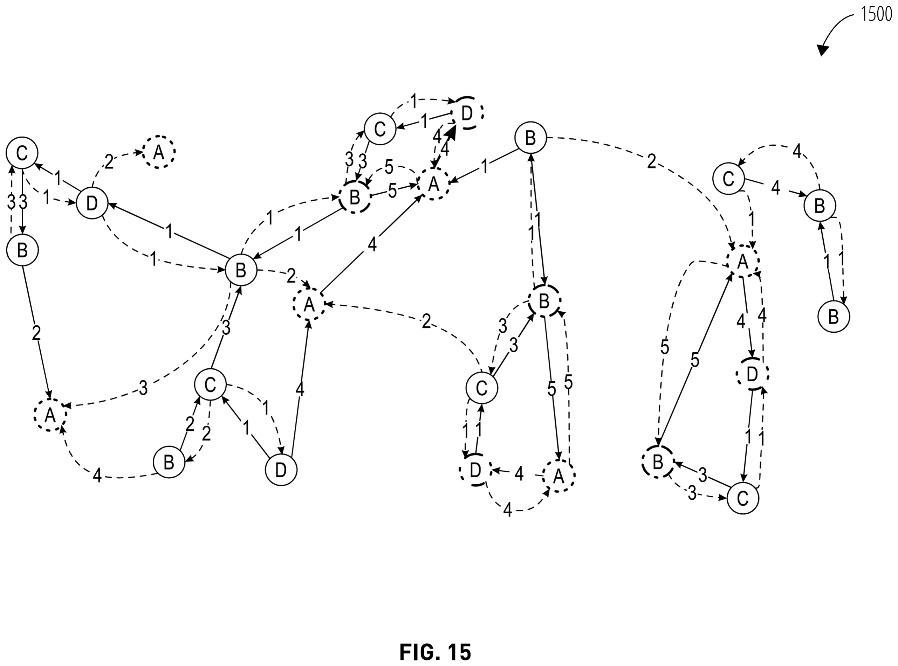

As shown in a further data visualization 1500 in FIG. 15, the knowledge graph system 232 then recursively proceeds, considering classes B and D (as indicated by dashed lines) as new starting class nodes for extending the path. In other words, the dashed circles in FIG. 15 highlight the new focus nodes at the ends of the current path, specifically the class nodes B that are connected to A via reverse relationship 5 and class nodes D that are connected to A via relationship 4. These highlighted nodes represent the next nodes to be processed in the recursive pattern detection algorithm.

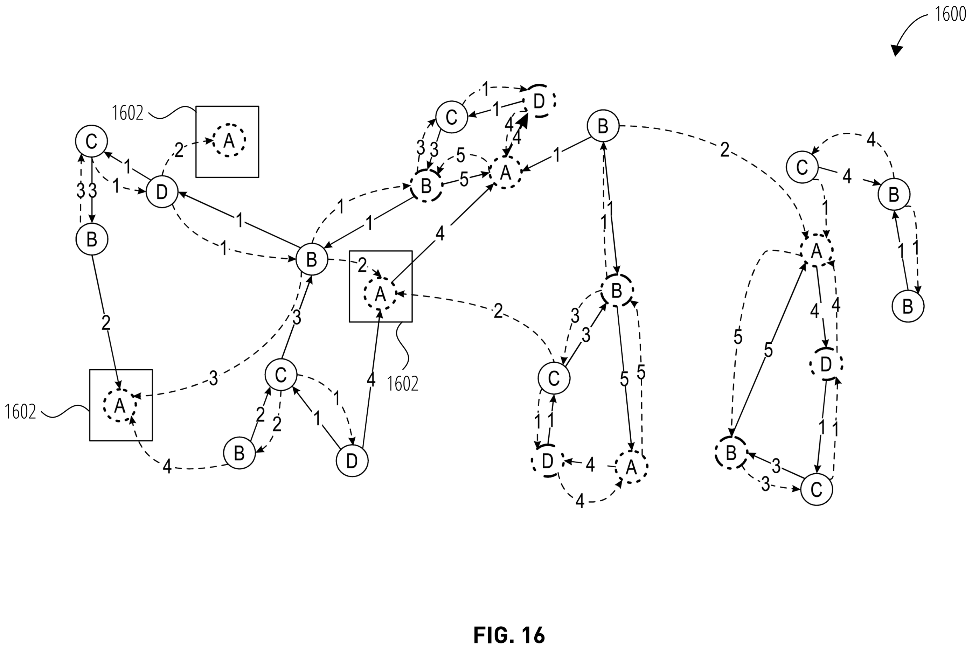

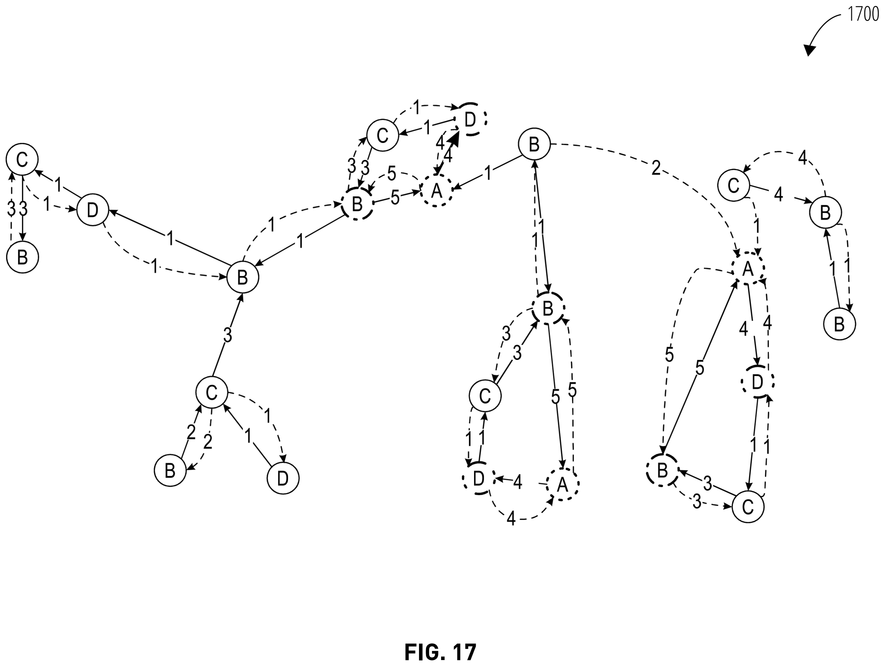

FIG. 16 shows a further data visualization 1600, highlighting nodes from class A that are not reachable. These nodes are shown in boxes 1602. Nodes that are not reachable based on the threshold criteria (as well as their connected edges) have been removed from display in a further data visualization 1700 in FIG. 17, which reflects the implicit filtering that occurs in the algorithm through the thresholding and removal step. This removal of non-qualifying nodes is visualized here for clarity, showing how the pattern detection algorithm progressively focuses on only the statistically significant portions of the graph.

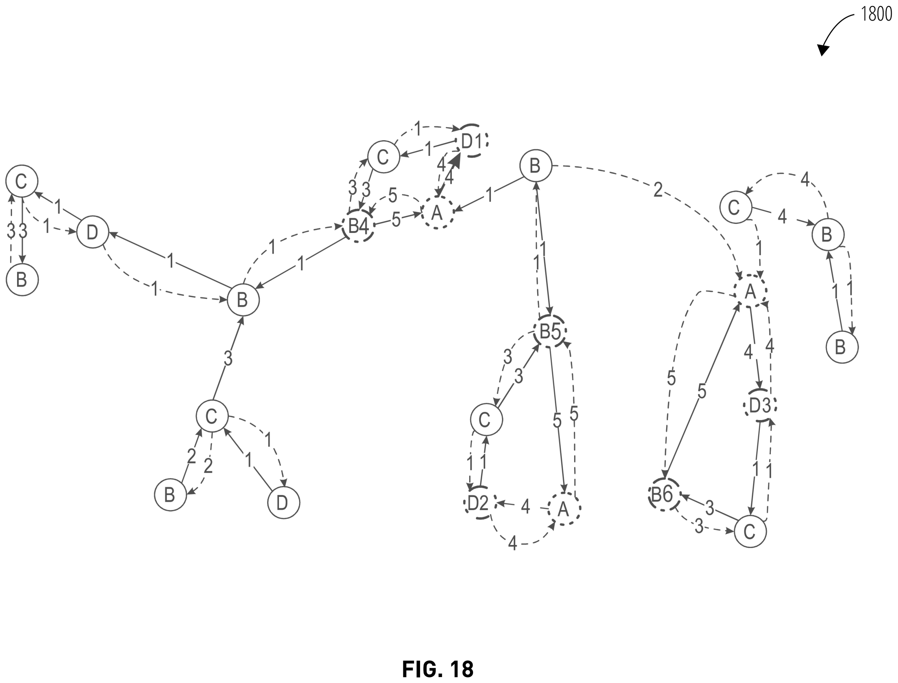

As depicted in a further data visualization 1800 in FIG. 18 by the labeling D1, D2, D3, B4, B5, and B6, the knowledge graph system 232 sets the new current class nodes from which to calculate occurrences and check thresholds in the manner described above for nodes A1-A6.

The knowledge graph system 232 detects the following for class D:
- Edge number 1 extends to class C from all 3 of the D-nodes D1, D2, and D3; and
- Edge number reverse 4 extends to class A from all 3 of the D-nodes D1, D2, and D3.

The knowledge graph system 232 detects the following for class B:
- Edge number reverse 3 extends to class C from all 3 of the B-nodes B4, B5, and B6; and
- Edge number 5 extends to class A from all 3 of the B-nodes B4, B5, and B6.

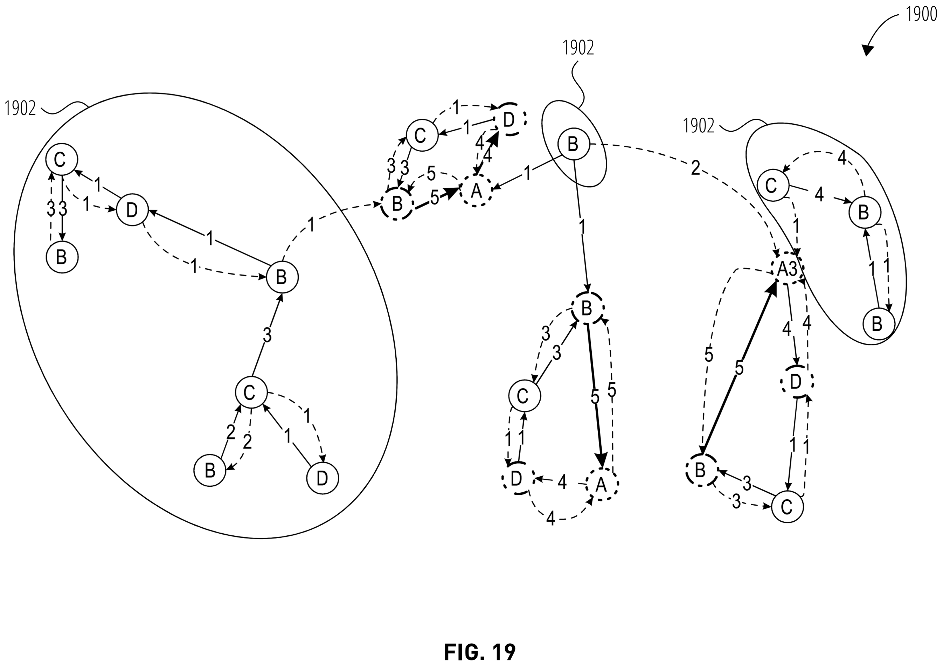

These statistically significant connections are kept, extending the path to class C, while the knowledge graph system 232 removes all nodes that are not reachable by the current focus nodes (via the edges above the threshold). As depicted in a further data visualization 1900 in FIG. 19, loops 1902 are not reachable and thus not further considered.

The pattern detection process thus essentially follows a geometric approach to progressively eliminate portions of the graph that do not participate in statistically significant patterns. The algorithm stops running once a stopping condition is met. In this example, the algorithm stops after N hops (e.g., a predetermined number of iterations, such as 4, 6, or 10) or once all nodes are either part of a pattern (or confirmed path) or deleted.

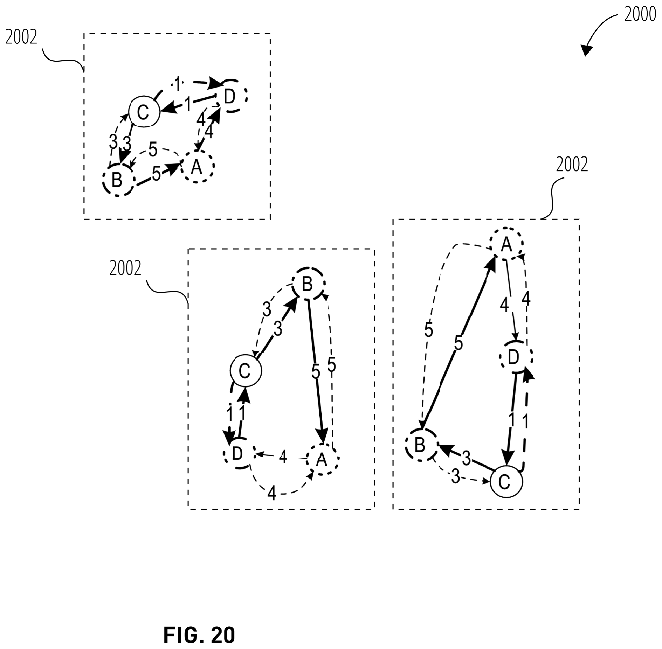

What remains is a pattern 2002 as shown in a final data visualization 2000 in FIG. 20, with no other nodes present, thus triggering the algorithm to stop. The visualization shows that the system has detected one pattern 2002 that repeats three times, representing the final validated pattern that has been extracted from the graph structure. In this example, the pattern 2002 is circular and includes classes A, B, C, and D. However, as discussed elsewhere herein, linear patterns can also be detected. The pattern 2002 shows the relationships between class nodes and their connecting properties that form statistically significant patterns based on occurrence frequencies exceeding configured thresholds, representing the output of the pattern detection process that can be used for knowledge graph extension.

FIG. 21 is a user interface diagram illustrating a user interface 2100 for configuring pattern detection operations, according to some examples. The user interface 2100 includes class information 2102 displaying a table of detected classes in a particular knowledge graph selected by a user (see the file path in FIG. 21). The class information 2102 includes checkboxes to select which classes to include in calculation and pattern detection. For each class (e.g., "PAINTING"), the user can independently select whether to include the class in calculations and whether to find patterns for that class.

By not including certain classes, the user can essentially cause the knowledge graph system 232 to assess only part of a larger knowledge graph. However, for purposes of the present disclosure, such part is still regarded as a knowledge graph data structure from which one or more patterns are detected.

The user interface 2100 further includes calculation options with several configurable parameters. An occurrence threshold 2104 field allows setting of the threshold value (shown as 0.4), while an iterations setting 2106 enables specifying the iteration limit (shown as 5). The user interface 2100 also includes approval settings 2108 with a toggle for enabling automatic approval and an automatic approval threshold 2110 (shown as 0.75). This sets a threshold against which the confidence score for a detected pattern is assessed by the knowledge graph system 232.

At the bottom of the user interface 2100, a calculate button 2112 initiates the pattern detection process. Additional checkboxes at the bottom allow users to optionally include all classes in calculation or use all classes for pattern detection.

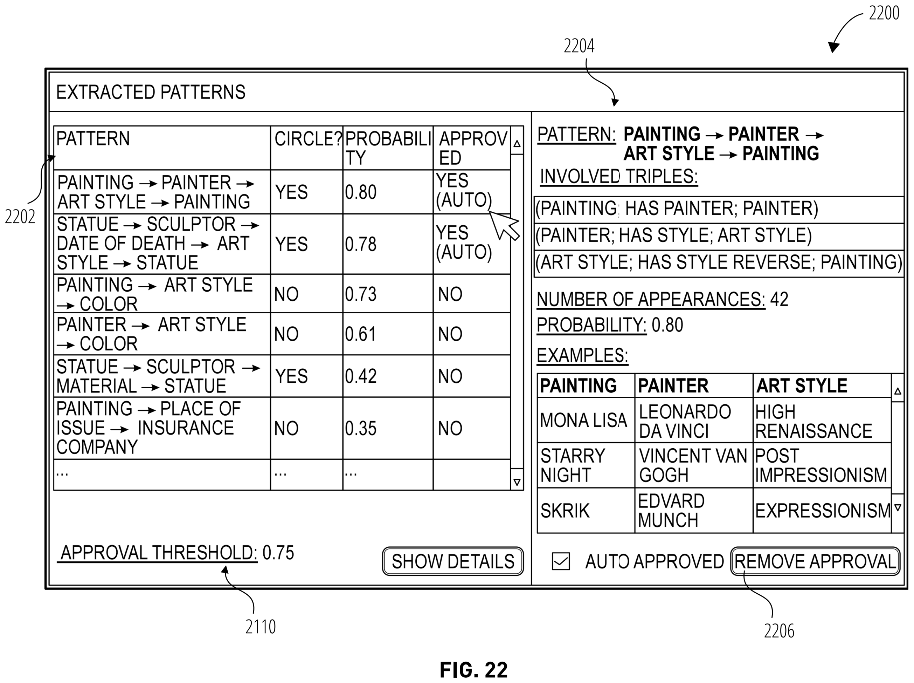

FIG. 22 is a user interface diagram illustrating a user interface 2200 for displaying and managing detected patterns, according to some examples. The user interface 2200 includes pattern information 2202 displaying a table of detected patterns along with their characteristics and approval status. For each pattern, the table of pattern information 2202 shows whether it forms a circle, its probability score, and whether it has been approved. The patterns are ordered by probability, with the highest probability pattern, "PAINTING -> PAINTER -> ART STYLE -> PAINTING" (0.80 probability), appearing at the top.

The user interface 2200 includes selected pattern details 2204 that provide detailed information about a selected pattern, including the involved triple data structures, number of appearances in the knowledge graph, probability score, and examples of the pattern in the knowledge graph. In the example shown in FIG. 22, the user has selected the highest probability pattern, causing its details to be shown as the selected pattern details 2204.

A remove approval button 2206 allows users to revoke approval for previously or automatically approved patterns. The user interface 2200 also displays the automatic approval threshold 2110 (shown as 0.75) that determines which patterns can be automatically approved.

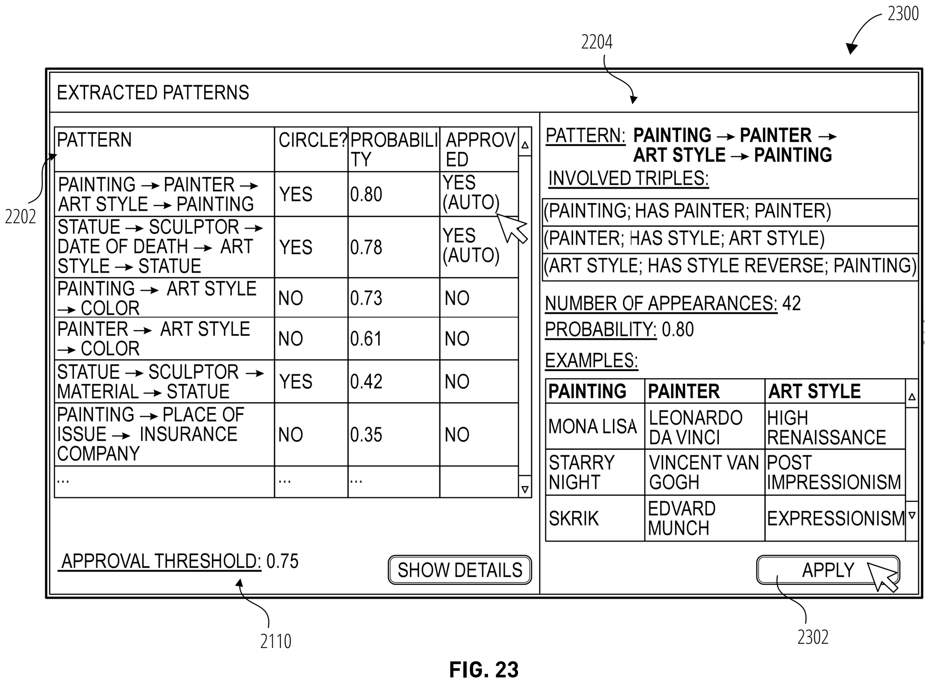

FIG. 23 is a user interface diagram illustrating another user interface 2300 for displaying and managing detected patterns, according to some examples. The user interface 2300 includes the same pattern information 2202 as shown in FIG. 22, displaying the table of detected patterns with their characteristics and approval status. The user interface 2300 also shows the selected pattern details 2204 with information about the selected pattern, including involved triples, number of appearances, and probability score.

The user interface 2300 differs from the user interface 2200 in the addition of an apply button 2302 that replaces the remove approval button from the user interface 2200. The apply button 2302 enables users to actively implement a selected pattern.

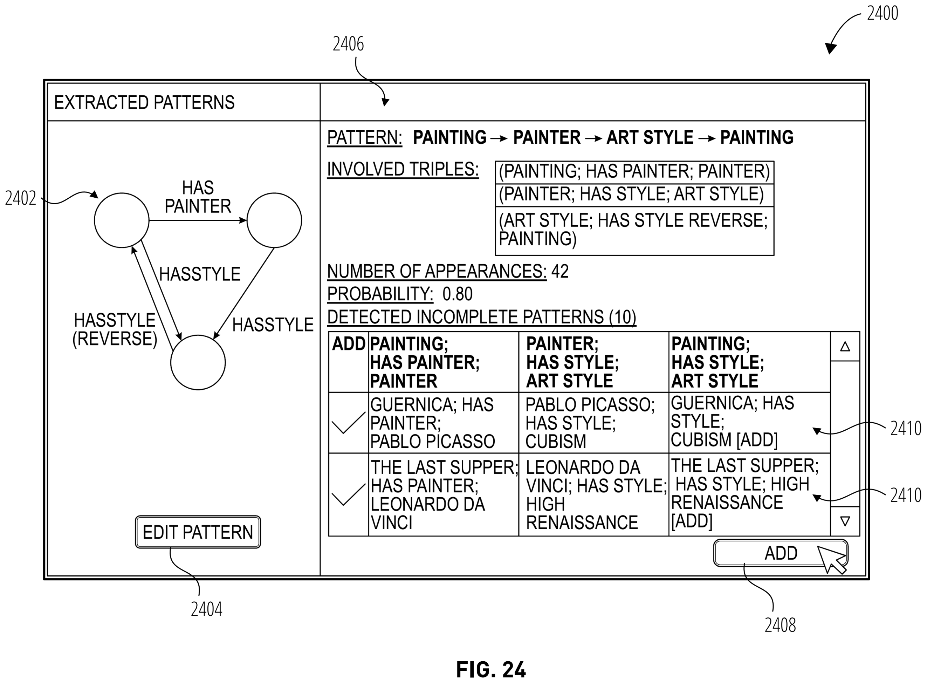

FIG. 24 is a user interface diagram illustrating a user interface 2400 for editing and adding detected patterns, according to some examples. The user interface 2400 visualizes a circular pattern 2402 showing the relationships between nodes connected by directional edges labeled with properties. The circular pattern 2402 is the same as the circular pattern 700 of FIG. 7. An edit pattern button 2404 allows users to modify the detected pattern structure.

The user interface 2400 further displays pattern details 2406 showing comprehensive information about the selected pattern, including the involved triples that form the pattern. An add button 2408 enables users to add new facts to the knowledge graph based on the detected pattern. To this end, the user interface 2400 shows new facts 2410 that can be derived from applying the pattern, allowing users to review and confirm the additions before they are made to the knowledge graph. The user interface 2400 thus provides granular control over pattern editing and application while maintaining a clear visualization of the pattern structure and its implications for the knowledge graph.

Examples in the present disclosure can be useful in various technical contexts. As a first example scenario, in a knowledge graph maintenance context, a pattern detection and completion system described herein can provide technical benefits for graph quality management. For example, the system enables automatic identification of missing facts in the knowledge graph based on detected patterns, eliminating the need for tedious analysis to identify information gaps. By preprocessing the knowledge graph data structure and applying recursive pattern detection algorithms, the system efficiently analyzes relationships between entities to identify recurring patterns that suggest where information might be missing. The confidence scoring mechanism automatically ranks detected patterns by statistical significance, allowing knowledge graph administrators to prioritize attention on high-confidence patterns for graph completion. This technical approach reduces the computational complexity of analyzing large volumes of graph data by operating on a condensed class-level representation rather than processing all instance-level relationships. Furthermore, the configurable thresholds allow graph administrators to balance automation with oversight, automatically adding high-confidence facts while maintaining review for less certain cases, thereby significantly improving both the efficiency and accuracy of knowledge graph maintenance compared to error-prone manual methods.

As a second example scenario, in a customer service technology environment, the knowledge graph pattern detection system provides technical benefits for escalation management. For example, the system enables automatic identification of recurring patterns in customer complaint data that correlate with escalations, eliminating the need for time-consuming manual analysis. The system can efficiently analyze complex relationships between ticket properties, customer interactions, and resolution pathways that human analysts might miss when browsing through extensive data manually. The confidence scoring mechanism automatically ranks detected patterns by statistical significance, allowing support teams to prioritize attention on tickets matching high-confidence escalation patterns. This technical approach reduces the computational complexity of analyzing large volumes of customer service data by operating on a condensed class-level representation rather than processing all instance-level relationships. The ability to detect both linear patterns (e.g., for extending the ontology with new escalation indicators) and circular patterns (e.g., for completing missing information in ticket data) provides comprehensive support for escalation prediction.

As a third example scenario, in a financial risk management technology context, the knowledge graph pattern detection system may provide technical benefits for identifying potential risks in investment portfolios. The system enables automatic detection of recurring patterns in financial instrument data that may indicate market risks, eliminating the need for time-consuming analysis of complex financial relationships. The system efficiently analyzes relationships between financial instruments, markets, products, and competitors that human analysts might miss when manually inspecting extensive financial data. The confidence scoring mechanism automatically ranks detected patterns by statistical significance, allowing risk analysts to prioritize attention on high-confidence risk patterns in specific financial instruments or market segments. This reduces the computational complexity of analyzing large volumes of financial data by operating on a condensed class-level representation rather than processing all instance-level relationships. The ability to detect both linear patterns (e.g., for extending the ontology with new risk indicators) and circular patterns (e.g., for completing missing information in financial instrument data) provides comprehensive support for risk identification.

As a fourth example scenario, in a human resources (HR) technology context, the knowledge graph pattern detection system may provide technical benefits for employee management systems. The system enables automatic identification of recurring patterns in employee data that correlate with high performance, eliminating the need for time-consuming analysis of complex employee relationships. The system efficiently analyzes relationships between employees, their skills, experiences, roles, and career development pathways that human analysts might miss when manually reviewing extensive HR data. The confidence scoring mechanism automatically ranks detected patterns by statistical significance, allowing HR managers to prioritize attention on high-confidence performance indicators across the workforce. This technical approach reduces the computational complexity of analyzing large volumes of employee data by operating on a condensed class-level representation rather than processing all instance-level relationships. The ability to detect both linear patterns (e.g., for extending the ontology with new performance indicators) and circular patterns (e.g., for completing missing information in employee profiles) provides comprehensive support for talent optimization. Furthermore, the geometric analysis approach produces patterns that are inherently interpretable by humans, as they represent clear relationship chains between entities rather than black-box predictions, enabling HR managers to explain performance assessments based on concrete, observable patterns in the data.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1: A system comprises at least one memory that stores instructions and one or more processors configured to, when executing the instructions, perform operations comprising: accessing a knowledge graph data structure stored in a data store; preprocessing the knowledge graph data structure to generate a modified knowledge graph data structure by replacing instance nodes with class nodes; automatically detecting a pattern through processing of the modified knowledge graph data structure comprising initiating a path from a starting class node in the modified knowledge graph data structure, and recursively extending the path, until a stopping condition is met, with a property-class combination from a current class node in the path having an occurrence frequency that exceeds an occurrence threshold; and adjusting the knowledge graph data structure stored in the data store based on the pattern.

Example 2: In the subject matter of Example 1, preprocessing of the knowledge graph data structure further comprises adding triple data structures to the knowledge graph data structure by materializing implicit statements based on an ontology data structure of the knowledge graph data structure.

Example 3: In the subject matter of Example 1, preprocessing of the knowledge graph data structure further comprises adding inverse relationships for one or more properties in the knowledge graph data structure.

Example 4: In the subject matter of Examples 1-3, wherein the property-class combination is a particular property-class combination from among a plurality of property-class combinations from the current class node, the operations comprise: determining the occurrence frequency for each one of the plurality of property-class combinations; determining that the occurrence frequency for the particular property-class combination exceeds the occurrence threshold; and in response to determining that the occurrence frequency for the particular property-class combination exceeds the occurrence threshold: extending the path with the particular property-class combination; and setting a target class node of the particular property-class combination as the current class node.

Example 5: In the subject matter of Examples 1-4, wherein the stopping condition comprises at least one of: detecting that the path forms a circular pattern; reaching a maximum number of iterations; or detecting that there is no property-class combination from the current class node for which the occurrence frequency exceeds the occurrence threshold.

Example 6: In the subject matter of Examples 1-5, the operations further comprise, prior to adjusting the knowledge graph data structure stored in the data store: generating a confidence score for the pattern by determining probabilities for relationships within the pattern and combining the determined probabilities; and validating the pattern based on the confidence score.

Example 7: In the subject matter of Examples 1-6, wherein adjusting of the knowledge graph data structure comprises: detecting that a confidence score generated for the pattern exceeds a confidence threshold; and in response to detecting that the confidence score exceeds the confidence threshold, automatically incorporating the pattern into an ontology data structure of the knowledge graph data structure.

Example 8: In the subject matter of Examples 1-7, the operations further comprise, prior to adjusting the knowledge graph data structure stored in the data store: generating a confidence score for the pattern; causing presentation, in a user interface on a user device, of information identifying a plurality of detected patterns, including the pattern and one or more further patterns detected from the modified knowledge graph data structure, wherein the plurality of detected patterns is ordered based on their respective confidence scores; and receiving user input to validate the pattern.

Example 9: In the subject matter of Examples 1-8, wherein adjusting the knowledge graph data structure comprises at least one of: incorporating the pattern into an ontology data structure of the knowledge graph data structure; or updating an assertion data structure of the knowledge graph data structure based on the pattern.

Example 10: In the subject matter of Example 9, wherein adjusting the knowledge graph data structure comprises updating the assertion data structure, and updating of the assertion data structure comprises: detecting, in the knowledge graph data structure, at least one incomplete pattern matching the pattern detected using the modified knowledge graph data structure; generating one or more triple data structures to complete the at least one incomplete pattern; and adding the one or more triple data structures to the assertion data structure.

Example 11: In the subject matter of Example 10, further comprising: causing presentation, in a user interface on a user device, of information identifying the one or more triple data structures; and receiving user input to select the one or more triple data structures, wherein the one or more triple data structures are added to the assertion data structure in response to receiving the user input.

Example 12: In the subject matter of Examples 1-11, wherein the pattern comprises: a linear pattern that is applied, after detection of the pattern, to extend an ontology data structure of the knowledge graph data structure; or a circular pattern that is applied, after detection of the pattern, to extend an assertion data structure of the knowledge graph data structure.

Example 13: In the subject matter of Examples 1-12, the operations further comprise: causing presentation, in a user interface on a user device, of information identifying a plurality of classes associated with the class nodes; receiving user input to select, from the plurality of classes, a class of interest; and in response to receiving the user input to select the class of interest, configuring the processing of the modified knowledge graph data structure such that the class of interest is the starting class node.

Example 14: In the subject matter of Examples 1-13, wherein the occurrence threshold is selected based on inheritance depth of one or more of the class nodes.

Example 15: A computer-implemented method performed by a computer system comprising a memory and at least one hardware processor, performing the operations of Example 1.

Example 16: In the subject matter of Example 15, wherein preprocessing of the knowledge graph data structure further comprises adding triple data structures to the knowledge graph data structure by materializing implicit statements based on an ontology data structure of the knowledge graph data structure.

Example 17: In the subject matter of Example 15, wherein preprocessing of the knowledge graph data structure further comprises adding inverse relationships for one or more properties in the knowledge graph data structure.

Example 18: One or more non-transitory computer-readable media storing computer-executable instructions that, when executed by a computing system, cause the computing system to perform the operations of Example 1.

Example 19: In the subject matter of Example 18, wherein preprocessing of the knowledge graph data structure further comprises adding triple data structures to the knowledge graph data structure by materializing implicit statements based on an ontology data structure of the knowledge graph data structure.

Example 20: In the subject matter of Example 18, wherein preprocessing of the knowledge graph data structure further comprises adding inverse relationships for one or more properties in the knowledge graph data structure.

Example 21: An apparatus comprising means to perform one or more elements of a method described in or related to any of the preceding examples or any other method or process described herein.

Example 22: One or more non-transitory computer-readable media comprising instructions to cause an electronic device, upon execution of the instructions by one or more processors of the electronic device, to perform one or more elements of a method described in or related to any of the preceding examples, or any other method or process described herein.

Example 23: An apparatus comprising logic, modules, or circuitry to perform one or more elements of a method described in or related to any of the preceding examples or any other method or process described herein.

Example 24: A method, technique, or process as described in or related to any of the preceding examples or portions or parts thereof.

Example 25: An apparatus comprising one or more processors and one or more computer-readable media comprising instructions that, when executed by the one or more processors, cause the one or more processors to perform the method, techniques, or process as described in or related to any of the preceding examples, or portions thereof.

Example 26: A computer program comprising instructions, wherein execution of the program by a processing element is to cause the processing element to carry out the method, techniques, or process as described in or related to any of the preceding examples, or portions thereof.

FIG. 25 is a block diagram of a machine in the example form of a computing system 2500, according to some examples, within which instructions 2524 may be executed for causing the computing system 2500 to perform one or more of the methodologies discussed herein. In some examples, the computing system 2500 includes a machine that operates as a standalone device, while in other examples the computing system 2500 includes a machine that is connected (e.g., networked) to other machines. The computing system 2500 can provide or form part of an operating environment in which aspects of the present disclosure are implemented.

In a networked deployment, a machine may operate in the capacity of a server or a client machine in server-client network environment, or as a peer machine in a peer-to-peer (or distributed) network environment. The machine may be a computer, a tablet, a cellular telephone, a web appliance, or other machine capable of executing instructions (sequential or otherwise) that specify actions to be taken by that machine. It is noted that while components typically related to only a single machine are illustrated in FIG. 25, the term "machine" shall also be taken to include any collection of machines that individually or jointly execute a set (or multiple sets) of instructions to perform any one or more of the methodologies discussed herein. The computing system 2500 may thus include multiple connected machines. Computing devices can be connected by a network.

The example computing system 2500 includes one or more processor(s) 2502 (e.g., a Central Processing Unit (CPU), a Graphics Processing Unit (GPU), or both), a primary or main memory 2504, and a static memory 2506, which communicate with each other via one or more communication connections 2508 (e.g., a bus, controller, or network connection). The computing system 2500 may further include one or more output devices, such as a display unit 2510 (e.g., a liquid crystal display (LCD) or Light-emitting diode (LED) display).

The computing system 2500 also includes one or more input devices, such as an input device 2512 (e.g., a keyboard or a touch-sensitive display screen), a navigation device 2514 (e.g., a mouse), storage 2516, a signal generation device 2518 (e.g., a speaker), and a network interface device 2520. The storage 2516 includes a machine-readable medium 2522 on which is stored one or more sets of data structures and instructions 2524 (e.g., software) embodying or utilized by one or more of the methodologies or functions described herein. The instructions 2524 may also reside, completely or at least partially, within the main memory 2504 or within the processor(s) 2502 during execution thereof by the computing system 2500, with the main memory 2504 and the processor(s) 2502 also each constituting a machine-readable medium 2522.

While the machine-readable medium 2522 is shown in accordance with some examples to be a single medium, the term "machine-readable medium" may include a single medium or multiple media (e.g., a centralized or distributed database, or associated caches and servers) that store the one or more instructions 2524 or data structures. The term "machine-readable medium" shall also be taken to include any tangible medium that is capable of storing, encoding, or carrying instructions 2524 for execution by the machine and that cause the machine to perform any one or more of the methodologies of the present disclosure, or that is capable of storing, encoding, or carrying data structures utilized by or associated with such instructions 2524. The term "machine-readable medium" shall accordingly be taken to include, but not be limited to, solid-state memories, and optical and magnetic media. Specific examples of a machine-readable medium 2522 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and compact disc read-only memory (CD-ROM) and digital versatile disc read-only memory (DVD-ROM) disks. A machine-readable medium is not a transmission medium.

The instructions 2524 may further be transmitted or received over a communications network 2526 using a transmission medium. The instructions 2524 may be transmitted using the network interface device 2520 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., Wi-Fi and Wi-Max networks). The term "transmission medium" shall be taken to include any intangible medium that is capable of storing, encoding, or carrying instructions 2524 for execution by the machine, and includes digital or analog communications signals or other intangible media to facilitate communication of such software.

Typically, operating system software (not shown) provides an operating environment for software executing in the computing system 2500, and coordinates activities of the components of the computing system 2500. One or more API calls may be made between components of the computing system 2500, or between a component of the computing system 2500 and an external component, based on user input received at the computing system 2500.

As used herein, the term "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a CPU, a Reduced Instruction Set Computing (RISC) Processor, a Complex Instruction Set Computing (CISC) Processor, a GPU, a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

Operations of example methods described herein may be performed, at least partially, by one or more processors that are temporarily configured (e.g., by software) or permanently configured to perform the relevant operations. The performance of certain of the operations may be distributed among the one or more processors, not only residing within a single machine, but deployed across a number of machines. A hardware-implemented component for performing method operations may comprise dedicated circuitry or logic that is permanently configured (e.g., as a special-purpose processor, such as an FPGA or an ASIC) to perform certain operations. A hardware-implemented component may also comprise programmable logic or circuitry (e.g., as encompassed within a general-purpose processor or another programmable processor) that is temporarily configured by software to perform certain operations.

One or more processors may operate to support performance of the relevant operations in a "cloud computing" environment or as a "software as a service (SaaS)." For example, at least some of the operations may be performed by a group of computers (as examples of machines including processors), these operations being accessible via a network (e.g., the Internet) and via one or more appropriate interfaces (e.g., APIs). In practice, cloud-based, on-premises-based, or hybrid scenarios can be supported in some examples.

Examples may be implemented in digital electronic circuitry, or in computer hardware, firmware, or software, or in combinations of them. Examples may be implemented using a computer program product, such as a computer program tangibly embodied in an information carrier (e.g., in a machine-readable medium for execution by, or to control the operation of, data processing apparatus, such as a programmable processor, a computer, or multiple computers). A computer program can be written in any suitable form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

Although specific examples are described herein, it will be evident that various modifications and changes may be made to these examples without departing from the broader spirit and scope of the disclosure. Accordingly, the specification and drawings are to be regarded in an illustrative rather than a restrictive sense. Examples of the subject matter may be referred to herein, individually or collectively, by the term "example" merely for convenience and without intending to voluntarily limit the scope of this application to any single example or concept if more than one is in fact disclosed. Thus, although specific examples have been illustrated and described herein, it should be appreciated that the present disclosure can also cover adaptations, combinations, or variations of various examples, including structural or logical substitutions and changes.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. Where the context permits, words using the singular or plural number may also include the plural or singular number, respectively. Except as otherwise indicated, the word "or" in reference to a list of two or more items, covers all of the following interpretations of the word: any one of the items in the list, all of the items in the list, and any combination of the items in the list.

As used in this disclosure, phrases of the form "at least one of an A, a B, or a C," "at least one of A, B, or C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

Although some examples, such as those depicted in the drawings, include a particular sequence of operations, the sequence may be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence. The term "operation" is used to refer to elements in the drawings of this disclosure for ease of reference and it will be appreciated that each "operation" may identify one or more operations, processes, actions, or steps, and may be performed by one or multiple components.

## Claims

1. A computer-implemented method performed by a computer system comprising a memory and at least one hardware processor, the computer-implemented method comprising:
accessing a knowledge graph data structure stored in a data store;
preprocessing the knowledge graph data structure to generate a modified knowledge graph data structure by replacing instance nodes with class nodes;
automatically detecting a pattern through processing of the modified knowledge graph data structure comprising:
initiating a path from a starting class node in the modified knowledge graph data structure, and
recursively extending the path, until a stopping condition is met, with a property-class combination from a current class node in the path having an occurrence frequency that exceeds an occurrence threshold; and
adjusting the knowledge graph data structure stored in the data store based on the pattern.

2. The computer-implemented method of claim 1, wherein preprocessing of the knowledge graph data structure further comprises:
adding triple data structures to the knowledge graph data structure by materializing implicit statements based on an ontology data structure of the knowledge graph data structure.

3. The computer-implemented method of claim 1 or 2, wherein preprocessing of the knowledge graph data structure further comprises:
adding inverse relationships for one or more properties in the knowledge graph data structure.

4. The computer-implemented method of any one of the preceding claims, wherein the property-class combination is a particular property-class combination from among a plurality of property-class combinations from the current class node, the method comprising:
determining the occurrence frequency for each one of the plurality of property-class combinations;
determining that the occurrence frequency for the particular property-class combination exceeds the occurrence threshold; and
in response to determining that the occurrence frequency for the particular property-class combination exceeds the occurrence threshold:
extending the path with the particular property-class combination; and
setting a target class node of the particular property-class combination as the current class node.

5. The computer-implemented method of any one of the preceding claims, wherein the stopping condition comprises at least one of:
detecting that the path forms a circular pattern;
reaching a maximum number of iterations; or
detecting that there is no property-class combination from the current class node for which the occurrence frequency exceeds the occurrence threshold.

6. The computer-implemented method of any one of the preceding claims, further comprising, prior to adjusting the knowledge graph data structure stored in the data store:
generating a confidence score for the pattern by determining probabilities for relationships within the pattern and combining the determined probabilities; and
validating the pattern based on the confidence score.

7. The computer-implemented method of any one of the preceding claims, wherein adjusting of the knowledge graph data structure comprises:
detecting that a confidence score generated for the pattern exceeds a confidence threshold; and
in response to detecting that the confidence score exceeds the confidence threshold, automatically incorporating the pattern into an ontology data structure of the knowledge graph data structure.

8. The computer-implemented method of any one of the preceding claims, further comprising, prior to adjusting the knowledge graph data structure stored in the data store:
generating a confidence score for the pattern;
causing presentation, in a user interface on a user device, of information identifying a plurality of detected patterns, including the pattern and one or more further patterns detected from the modified knowledge graph data structure, wherein the plurality of detected patterns is ordered based on their respective confidence scores; and
receiving user input to validate the pattern.

9. The computer-implemented method of any one of the preceding claims, wherein adjusting the knowledge graph data structure comprises at least one of:
incorporating the pattern into an ontology data structure of the knowledge graph data structure; and/or
updating an assertion data structure of the knowledge graph data structure based on the pattern.

10. The computer-implemented method of any one of the preceding claims, wherein adjusting the knowledge graph data structure comprises updating the assertion data structure, and updating of the assertion data structure comprises:
detecting, in the knowledge graph data structure, at least one incomplete pattern matching the pattern detected using the modified knowledge graph data structure;
generating one or more triple data structures to complete the at least one incomplete pattern; and
adding the one or more triple data structures to the assertion data structure,
wherein the method optionally further comprisies:
causing presentation, in a user interface on a user device, of information identifying the one or more triple data structures; and
receiving user input to select the one or more triple data structures, wherein the one or more triple data structures are added to the assertion data structure in response to receiving the user input.

11. The computer-implemented method of any one of the preceding claims, wherein the pattern comprises:
a linear pattern that is applied, after detection of the pattern, to extend an ontology data structure of the knowledge graph data structure; and/or
a circular pattern that is applied, after detection of the pattern, to extend an assertion data structure of the knowledge graph data structure.

12. The computer-implemented method of any one of the preceding claims, further comprising:
causing presentation, in a user interface on a user device, of information identifying a plurality of classes associated with the class nodes;
receiving user input to select, from the plurality of classes, a class of interest; and
in response to receiving the user input to select the class of interest, configuring the processing of the modified knowledge graph data structure such that the class of interest is the starting class node.

13. The computer-implemented method of any one of the preceding claims, wherein the occurrence threshold is selected based on inheritance depth of one or more of the class nodes.

14. A system comprising:
at least one memory that stores instructions; and
one or more processors to, when executing the instructions, perform operations according to a method of any one of claims 1 to 13.

15. One or more non-transitory computer-readable media storing computer-executable instructions that, when executed by a computing system, cause the computing system to perform operations according to a method of any one of claims 1 to 13.
